(19) **Europäisches Patentamt** / **European Patent Office** / **Office européen des brevets**

(11) **EP 4 038 476 B1**

(12) **FASCICULE DE BREVET EUROPEEN**

(45) Date de publication et mention de la délivrance du brevet:
**01.05.2024 Bulletin 2024/18**

(21) Numéro de dépôt: **20796861.1**

(22) Date de dépôt: **28.09.2020**

(51) Classification Internationale des Brevets (IPC):
**G06F 1/324** (2019.01)  **G06F 1/3296** (2019.01)
**G06F 1/08** (2006.01)

(52) Classification Coopérative des Brevets (CPC):
**G06F 1/324; G06F 1/08; G06F 1/3296;** Y02D 10/00

(86) Numéro de dépôt international:
**PCT/FR2020/051684**

(87) Numéro de publication internationale:
**WO 2021/064313 (08.04.2021 Gazette 2021/14)**

(54) **DISPOSITIF DE GENERATION D'UNE TENSION D'ALIMENTATION / POLARISATION ET D'UN SIGNAL D'HORLOGE POUR UN CIRCUIT NUMERIQUE SYNCHRONE**

VORRICHTUNG ZUR ERZEUGUNG EINER VERSORGUNGS-/POLARISATIONSSPANNUNG UND EINES TAKTSIGNALS FÜR EINE SYNCHRONE DIGITALE SCHALTUNG

DEVICE FOR GENERATING A SUPPLY/POLARISATION VOLTAGE AND A CLOCK SIGNAL FOR A SYNCHRONOUS DIGITAL CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2019 FR 1910898**

(43) Date de publication de la demande:
**10.08.2022 Bulletin 2022/32**

(73) Titulaires:
- **Commissariat à l'énergie atomique et aux énergies alternatives**
  **75015 Paris (FR)**
- **Safran**
  **75015 Paris (FR)**

(72) Inventeur: **SIBEUD, Loïc**
  **38054 GRENOBLE CEDEX 09 (FR)**

(74) Mandataire: **Brevalex**
  **Tour Trinity**
  **1 B Place de la Défense**
  **92400 Courbevoie (FR)**

(56) Documents cités:
**US-A- 5 727 193      US-A1- 2002 190 283**
**US-A1- 2015 254 384**

- **PELICIA MARCOS MAURICIO ET AL: "A back biasing voltage generator for 28nm UTBB-FDSOI RVT CMOS digital circuits", 2018 INTERNATIONAL CONFERENCE ON IC DESIGN & TECHNOLOGY (ICICDT), IEEE, 4 juin 2018 (2018-06-04), pages 1-4, XP033367998, DOI: 10.1109/ICICDT.2018.8399721**

**Description**

## DOMAINE TECHNIQUE ET ART ANTÉRIEUR

L'invention concerne le domaine des circuits électroniques numériques synchrones, et propose une solution pour réduire la consommation électrique de ces circuits.

La fréquence maximale de fonctionnement d'un circuit numérique synchrone correspond à la fréquence d'horloge maximale avec laquelle le circuit fonctionne correctement. Au-dessus de cette fréquence d'horloge maximale, le circuit ne fonctionne plus correctement et produit des erreurs.

La valeur de cette fréquence d'horloge maximale dépend du délai du chemin critique du circuit. Le chemin critique d'un circuit numérique synchrone est le chemin entre deux bascules successives (sans bascule interposée entre ces deux bascules) du circuit pour lequel le délai de propagation d'un signal, dans ce chemin, est le plus long parmi tous les chemins entre deux bascules successives existants dans le circuit. Ainsi, la période minimale du signal d'horloge cadençant le circuit, dont la valeur correspond à l'inverse de celle de la fréquence d'horloge maximale, ne doit pas être inférieure au délai du chemin critique du circuit pour ne pas générer d'erreur.

Ici et dans tout le reste du document, le temps de préparation $t_{setup}$ de la bascule se trouvant à la fin du chemin critique est considéré comme étant inclus dans le délai de chemin critique.

Lors du choix de la fréquence d'horloge utilisée pour cadencer le circuit, il convient de tenir compte de plusieurs facteurs dont dépend la vitesse de fonctionnement du circuit :

- les variations liées au procédé de fabrication de composants du circuit (« Process Variation » en anglais, ou variations de procédé),
- la température de fonctionnement du circuit, et
- la tension d'alimentation $V_{DD}$ du circuit.

La valeur de la tension d'alimentation $V_{DD}$ d'un tel circuit est choisie de manière à ce que le circuit puisse fonctionner correctement à la vitesse requise, même dans la configuration la plus défavorable, c'est-à-dire en considérant les plus importantes variations de procédé et la température de fonctionnement la plus défavorable.

De plus, la valeur de la tension d'alimentation $V_{DD}$ est généralement choisie telle qu'elle corresponde à celle caractérisant les cellules standards (« standard cell » en anglais ») utilisées pour la conception du circuit, et qui est choisie comme étant supérieure à la valeur de tension d'alimentation requise pour satisfaire la contrainte de vitesse de fonctionnement du circuit.

La marge entre la valeur de la tension d'alimentation $V_{DD}$ appliquée au circuit et la valeur requise par la contrainte de vitesse seule du circuit correspond à une surconsommation électrique inutile du circuit, surtout dans les cas favorables de variations de procédé et de température de fonctionnement où le circuit devient alors beaucoup plus rapide que nécessaire. En proportion, cette surconsommation électrique est d'autant plus importante pour les circuits alimentés en faible inversion (circuit fonctionnant à très faible puissance avec une tension d'alimentation de valeur proche ou inférieure à celle de la tension de seuil des transistors du circuit) où la différence de vitesse de fonctionnement du circuit due aux variations de procédé et à la température de fonctionnement du circuit est beaucoup plus grande que pour les circuits alimentés en forte inversion (circuits rapides nécessitant une tension d'alimentation plus élevée).

Afin de réduire cette surconsommation, une solution consiste à ajuster de manière automatique la tension d'alimentation $V_{DD}$ du circuit en fonction de la température de fonctionnement, des variations de procédé et de la vitesse à laquelle le circuit doit fonctionner.

Cette solution repose sur l'utilisation d'un circuit de type CPR (« Critical Path Replica » en anglais), ou réplique du chemin critique, qui comporte un chemin de propagation de signal reproduisant le chemin critique du circuit, c'est-à-dire dont le délai de propagation d'un signal entre l'entrée et la sortie de ce chemin correspond au délai du chemin critique du circuit, pour mesurer la vitesse maximum que le circuit peut atteindre. La tension d'alimentation du CPR, identique à celle du circuit, est ajustée par contre-réaction jusqu'à ce que la somme du délai dans le chemin de propagation du CPR et d'un délai de marge $\Delta$ soit égale à la période du signal d'horloge appliqué sur les bascules du circuit. Le délai de marge $\Delta$ est ajouté afin de pouvoir s'affranchir des erreurs entre le délai du chemin de propagation du CPR et le délai du chemin critique du circuit, dues par exemple aux dispersions de fabrication ou à des variations de tension dans la grille d'alimentation du circuit.

Une telle solution peut être mise en oeuvre au moyen d'une DLL (« Delay Locked Loop », ou boucle à verrouillage de retard), comme décrit par exemple dans le document US 8 046 601 B1. Dans cette configuration, le signal d'horloge est appliqué en entrée du CPR puis sa phase est comparée à celle du signal d'horloge retardé obtenu en sortie du CPR. Un système de contrôle permet d'ajuster la tension d'alimentation du CPR jusqu'à ce que le signal d'horloge et le signal d'horloge retardé par le CPR appliqués sur les entrées du comparateur de phase soient en phase, indiquant ainsi que le délai de propagation à travers le CPR est égal à la période du signal d'horloge.

Il est également possible de mettre en oeuvre cette solution au moyen d'une PLL (« Phase Locked Loop », ou boucle à verrouillage de phase), comme décrit par exemple dans le document US 5 585 754. Dans cette configuration, le CPR est rendu inverseur puis rebouclé sur lui-même de manière à obtenir un oscillateur dont la sortie est comparée au signal d'horloge par un comparateur de phase qui pilote également une pompe de charge, la tension d'alimentation étant obtenue à partir du signal de sortie délivré par la pompe de charge. La tension d'alimentation est ajustée jusqu'à ce que la période d'oscillation du CPR monté en oscillateur soit égale à la période du signal d'horloge.

Une autre approche pour réduire la surconsommation électrique inutile du circuit consiste à ajuster la tension de seuil des transistors par polarisation arrière. Le principe de cette approche est similaire à celui appliqué pour ajuster la valeur de la tension d'alimentation du circuit : la vitesse intrinsèque du circuit, mesurée à l'aide d'un CPR, est comparée à la vitesse requise déterminée par la période du signal d'horloge, puis les tensions de seuil des transistors P et N sont ajustées par contre-réaction jusqu'à ce que la vitesse du circuit soit conforme à la période du signal d'horloge, plus le délai de marge. Une telle approche est possible lorsque les transistors sont de type FDSOI (« Fully-Depleted Silicon On Insulator », ou silicium sur isolant totalement déserté) et comportent une grille arrière (« back gate ») permettant une polarisation de la face arrière de ces transistors, et permet uniquement de réduire la consommation électrique due aux fuites et aux courants de conduction simultanée des transistors N et P. Elle ne permet pas de réduire la consommation dynamique due aux capacités formées par les interconnexions.

Le principal inconvénient des techniques citées précédemment est qu'elles nécessitent toutes une source du signal d'horloge et un CPR distincts, ainsi que toute la circuiterie associée à la contre-réaction (détecteur de phase, pompe de charge). La complexité et la consommation électrique de ces solutions les rendent peu attractives pour les applications très basse consommation.

Le document US 2002/190283 A1 décrit un dispositif de génération de tension d'alimentation et de signal d'horloge comprenant un circuit oscillateur et un circuit amplificateur.

## EXPOSÉ DE L'INVENTION

Un but de la présente invention est de proposer un dispositif de génération d'au moins une tension d'alimentation ou de polarisation et d'au moins un signal d'horloge, pour alimenter ou polariser, et cadencer un circuit numérique synchrone, en optimisant au mieux la valeur de la tension d'alimentation ou de polarisation pour limiter la surconsommation électrique du circuit numérique synchrone.

Pour cela, il est proposé un dispositif de génération d'au moins une tension d'alimentation ou de polarisation et d'au moins un signal d'horloge, configuré pour alimenter un circuit numérique synchrone ou polariser des faces arrières de transistors FDSOI du circuit numérique synchrone et cadencer le circuit numérique synchrone, comprenant au moins :

- un circuit oscillateur comprenant un chemin de propagation de signal dont le délai est représentatif du délai d'un chemin critique du circuit numérique synchrone et qui varie en fonction de la valeur d'une tension d'alimentation électrique du circuit oscillateur ou d'au moins une tension de polarisation arrière de transistors FDSOI du circuit oscillateur, et configuré pour délivrer sur une sortie un signal périodique dont la fréquence dépend du délai du chemin de propagation de signal ;

- un élément résistif de résistance R ;

- une capacité commutée comprenant une capacité C et qui est couplée à la sortie du circuit oscillateur telle que la fréquence de commutation de la capacité commutée corresponde à la fréquence du signal périodique délivré sur la sortie du circuit oscillateur ou à un multiple ou à un diviseur de la fréquence du signal périodique délivré sur la sortie du circuit oscillateur ;

- un circuit amplificateur configuré pour délivrer, sur une sortie couplée à une entrée d'alimentation électrique du circuit oscillateur ou à au moins une entrée de tension de polarisation arrière des transistors FDSOI du circuit oscillateur, une tension dont l'amplitude est représentative d'une différence entre la valeur de la résistance R et la valeur d'une résistance équivalente de la capacité commutée.

En outre, l'invention propose plus particulièrement un dispositif de génération d'au moins une tension d'alimentation et d'au moins un signal d'horloge, configuré pour alimenter et cadencer un circuit numérique synchrone, comprenant au moins :

- un circuit oscillateur comprenant un chemin de propagation de signal dont le délai est représentatif du délai d'un chemin critique du circuit numérique synchrone et qui varie en fonction de la valeur d'une tension d'alimentation électrique du circuit oscillateur, et configuré pour délivrer sur une sortie, qui est apte à être couplée à une entrée d'horloge du circuit numérique synchrone, un signal périodique dont la fréquence dépend du délai du chemin de propagation de signal ;

- un élément résistif de résistance R ;

- une capacité commutée comprenant une capacité C et qui est couplée à la sortie du circuit oscillateur telle que la fréquence de commutation de la capacité commutée corresponde à la fréquence du signal périodique délivré sur la sortie du circuit oscillateur ou à un multiple ou à un diviseur de la fréquence du signal périodique délivré sur la sortie du circuit oscillateur ;

- un circuit amplificateur configuré pour délivrer, sur une sortie couplée à une entrée d'alimentation électrique du circuit oscillateur, une tension dont l'amplitude est représentative d'une différence entre la valeur de la résistance R et la valeur d'une résistance équivalente de la capacité commutée.

L'invention propose également un dispositif de génération d'au moins une tension de polarisation et d'au moins un signal d'horloge, configuré pour polariser des faces arrières de transistors FDSOI du circuit numérique synchrone et cadencer le circuit numérique synchrone, comprenant au moins :

- un circuit oscillateur comprenant un chemin de propagation de signal dont le délai est représentatif du délai d'un chemin critique du circuit numérique synchrone et qui varie en fonction de la valeur d'au moins une tension de polarisation arrière de transistors FDSOI du circuit oscillateur, et configuré pour délivrer sur une sortie, qui est apte à être couplée à une entrée d'horloge du circuit numérique synchrone, un signal périodique dont la fréquence dépend du délai du chemin de propagation de signal ;
- un élément résistif de résistance R ;
- une capacité commutée comprenant une capacité C et qui est couplée à la sortie du circuit oscillateur telle que la fréquence de commutation de la capacité commutée corresponde à la fréquence du signal périodique délivré sur la sortie du circuit oscillateur ou à un multiple ou à un diviseur de la fréquence du signal périodique délivré sur la sortie du circuit oscillateur ;
- un circuit amplificateur configuré pour délivrer, sur une sortie couplée à au moins une entrée de tension de polarisation arrière des transistors FDSOI du circuit oscillateur, une tension dont l'amplitude est représentative d'une différence entre la valeur de la résistance R et la valeur d'une résistance équivalente de la capacité commutée.

La tension d'alimentation destinée à alimenter le circuit numérique synchrone, ou la ou les tensions de polarisation destinées à polariser les faces arrières de transistors FDSOI du circuit numérique synchrone, peut ou peuvent correspondre à la tension obtenue sur la sortie du circuit amplificateur, ou peut ou peuvent correspondre à une ou plusieurs autres tensions obtenues en convertissant la tension obtenue sur la sortie du circuit amplificateur.

Le signal d'horloge destiné à cadencer, ou synchroniser, le circuit numérique synchrone peut correspondre au signal périodique délivré sur la sortie du circuit oscillateur, ou peut correspondre à un signal obtenu en multipliant ou en divisant la fréquence du signal périodique délivré sur la sortie du circuit oscillateur.

Un multiple d'une fréquence correspond au produit de cette fréquence par un nombre entier positif. Un diviseur d'une fréquence correspond au résultat de la division de cette fréquence par un nombre entier positif.

Dans ce dispositif, la tension d'alimentation du circuit numérique synchrone ou la ou les tensions de polarisation arrière des transistors FDSOI du circuit numérique synchrone est obtenue à partir de la tension d'alimentation du circuit oscillateur ou de la ou des tensions de polarisation arrière des transistors FDSOI du circuit oscillateur dont le délai de boucle, ou délai de chemin de propagation, est représentatif du délai de chemin critique du circuit numérique synchrone. Dans ce dispositif, la période du signal périodique délivré sur la sortie du circuit oscillateur, et donc également le délai du chemin de propagation de signal du circuit oscillateur, est asservie à la constante RC, ou plus généralement à la constante $\alpha$.RC avec $\alpha$ nombre positif non nul, par contrôle de sa tension d'alimentation ou de sa ou ses tensions de polarisation arrière de ses transistors FDSOI.

Le délai du chemin de propagation de signal du circuit oscillateur varie en fonction de la valeur de la tension d'alimentation électrique du circuit oscillateur, de la ou des tensions de polarisation arrière de ses transistors FDOI lorsque le circuit oscillateur comporte de tels transistors FDSOI pouvant être polarisés par leur face arrière, mais également en fonction du procédé de fabrication des composants du circuit oscillateur et de la température de fonctionnement du circuit oscillateur, de la même manière que le circuit numérique synchrone. Ce dispositif propose donc de réduire la consommation électrique du circuit numérique synchrone en générant une tension d'alimentation optimale ou au moins une tension de polarisation arrière des transistors FDSOI dont la ou les valeurs tiennent compte du procédé de fabrication, de la température, et de la vitesse à laquelle le circuit numérique synchrone doit fonctionner.

Ainsi, lorsque le circuit numérique synchrone ne comporte pas de transistors FDSOI pouvant être polarisés par leur face arrière, le dispositif proposé ici limite la consommation électrique du circuit numérique synchrone via un contrôle de la tension d'alimentation du circuit numérique synchrone. Lorsque le circuit numérique synchrone comporte des transistors FDSOI pouvant être polarisés par leur face arrière, le dispositif proposé ici limite la consommation électrique du circuit numérique synchrone soit via un contrôle de la tension d'alimentation du circuit numérique synchrone, soit via un contrôle d'une ou plusieurs tensions de polarisation arrière des transistors FDSOI du circuit numérique synchrone (par exemple une première tension de polarisation destinée à être appliquée en face arrière des transistors FDSOI de type P et une deuxième tension de polarisation destinée à être appliquée en face arrière des transistors FDSOI de type N).

Le dispositif décrit a pour avantage de ne pas faire appel à une boucle de type PLL ou DLL, et forme donc une solution plus simple, moins coûteuse et moins consommatrice pour générer la tension d'alimentation ou la ou les tensions de polarisation, et le signal d'horloge du circuit numérique synchrone.

L'invention s'applique avantageusement aux applications très basse consommation, comme par exemple du domaine de l'Internet des objets (ou IoT) ou de l'électronique médicale implantée.

Dans ce document, le terme « couplé » signifie que deux éléments couplés l'un à l'autre sont reliés l'un à l'autre soit directement (sans élément intermédiaire entre eux) soit indirectement (avec un ou plusieurs éléments intermédiaires entre eux). De plus, ce terme « couplé » est utilisé dans tout le document pour désigner un couplage électrique entre deux éléments.

Le circuit oscillateur peut être de type CPR ou peut comporter au moins un oscillateur en anneau.

Le circuit oscillateur peut être configuré tel que la fréquence du signal périodique délivré sur la sortie du circuit oscillateur soit $f_{OSC} = 1/(td_{MAX} + \Delta)$, avec $td_{MAX}$ correspondant au délai du chemin critique du circuit numérique synchrone et $\Delta$ correspondant à un délai de marge. Ainsi, grâce à ce délai de marge, il est garanti que la fréquence du signal périodique délivré sur la sortie du circuit oscillateur n'est pas supérieure à la fréquence de fonctionnement maximale du circuit numérique synchrone.

Le chemin de propagation de signal du circuit oscillateur peut comporter un nombre impair d'éléments inverseurs et peut former une boucle telle qu'une sortie du chemin de propagation de signal soit reliée à une entrée du chemin de propagation de signal, et le délai de propagation entre l'entrée et la sortie du chemin de propagation de signal peut être égal à $1/(2.fosc)$. Ainsi, la période du signal périodique délivré sur la sortie du circuit oscillateur correspond à la durée pour parcourir deux fois le chemin de propagation, c'est-à-dire $1/fosc$.

Dans une première configuration, le circuit amplificateur peut comporter :

- une première source de courant couplée à l'élément résistif et une deuxième source de courant couplée à la capacité commutée, les première et deuxième sources de courant étant configurées pour délivrer des courants électriques de même valeur dans l'élément résistif et dans la capacité commutée ;
- un amplificateur différentiel monté en intégrateur, comportant une première entrée couplée à l'élément résistif telle qu'une tension aux bornes de l'élément résistif soit appliquée sur la première entrée, et une deuxième entrée couplée à la capacité commutée telle qu'une tension aux bornes de la capacité commutée soit appliquée sur la deuxième entrée.

Dans une deuxième configuration, le circuit amplificateur peut comporter :

- une source de courant couplée à l'élément résistif et à la capacité commutée qui sont couplés en série l'un à l'autre ;
- deux impédances couplées en série l'une à l'autre et en parallèle à l'élément résistif et la capacité commutée ;
- un amplificateur différentiel monté en intégrateur, comportant une première entrée couplée à un premier noeud auquel les deux impédances sont couplées et une deuxième entrée couplée à un deuxième noeud auquel l'élément résistif et la capacité commutée sont couplés.

Le dispositif peut comporter en outre un circuit logique comprenant une entrée couplée à la sortie du circuit oscillateur et au moins deux sorties chacune couplée à l'un d'au moins deux interrupteurs de la capacité commutée, le circuit logique pouvant être configuré pour délivrer sur les deux sorties des signaux périodiques de fréquence égale à fosc/N, avec N nombre entier supérieur ou égal à 1, et commandant chacun alternativement l'ouverture et la fermeture d'un des deux interrupteurs de la capacité commutée.

Une entrée d'alimentation électrique du circuit logique peut être couplée à l'entrée d'alimentation électrique du circuit oscillateur. En particulier, lorsque le circuit oscillateur est alimenté par une tension d'alimentation obtenue, directement ou via à un élément de conversion, depuis la sortie du circuit amplificateur, le circuit logique peut donc être également alimenté électriquement par cette même tension d'alimentation.

La capacité commuté peut comporter au moins deux condensateurs couplés en série l'un à l'autre et ayant chacun une capacité de valeur C/2, chacun des deux condensateurs étant couplé en parallèle à un interrupteur de la capacité commutée. Cette configuration permet de diminuer par deux les variations de la tension aux bornes de la capacité commutée qui génèrent du bruit à ces bornes.

Le circuit oscillateur peut être configuré pour délivrer sur sa sortie un signal périodique comprenant K phases, avec K nombre entier supérieur ou égal à 2, et le dispositif peut comporter K capacités commutées couplées en parallèle les unes des autres et couplées à la sortie du circuit oscillateur telles que chacune des K capacités commutées soit pilotée par l'une des K phases du signal périodique. Cette configuration permet de réduire d'un facteur K les variations de tension aux bornes des capacités commutées qui génèrent du bruit à ces bornes.

Le dispositif peut comporter en outre un convertisseur de tension de type continu - continu comprenant une entrée couplée à la sortie du circuit amplificateur. Dans cette configuration, la tension d'alimentation et/ou de polarisation destinée au circuit numérique synchrone correspond à la tension obtenue en sortie du convertisseur. Le convertisseur de tension peut avoir un gain égal à 1 ou supérieur à 1.

Le convertisseur de tension peut être configuré pour délivrer en sortie une tension de valeur égale à la somme de la tension appliquée sur son entrée et d'une marge de tension $\Delta V$. Une telle marge de tension permet, comme lorsque le circuit oscillateur applique un délai de marge $\Delta$, au dispositif de s'affranchir des erreurs entre le délai du chemin de propagation du CPR et le délai du chemin critique du circuit. Cette marge de tension peut être obtenue en incluant un offset dans le convertisseur de tension, c'est-à-dire en réalisant le convertisseur de tension tel qu'il additionne la marge de tension $\Delta V$ à la

tension appliquée sur son entrée, ou en lui conférant un gain supérieur à 1, c'est-à-dire tel que le convertisseur de tension multiplie la tension appliquée sur son entrée par un facteur de valeur supérieure à 1.

Le dispositif peut comporter en outre, lorsque le dispositif est configuré pour polariser des faces arrières de transistors FDSOI du circuit numérique synchrone, au moins un circuit de pompe de charge comprenant une entrée couplée à la sortie du circuit amplificateur et comprenant au moins une sortie couplée à ladite au moins une entrée de tension de polarisation arrière des transistors FDSOI du circuit oscillateur. Le circuit de pompe de charge permet d'appliquer un facteur de multiplication à la tension délivrée en sortie du circuit amplificateur pour obtenir une tension de valeur adaptée pour polariser en face arrière les transistors FDSOI du circuit oscillateur et du circuit numérique synchrone. Le facteur de multiplication est par exemple égal à 3.

Lorsque des transistors FDSOI RVT (« Regular Voltage Transistor ») de type P et N sont destinés à être polarisés par leur face arrière, le dispositif peut comporter un premier circuit de pompe de charge comprenant une entrée couplée à la sortie du circuit amplificateur, une sortie couplée à l'entrée de tension de polarisation arrière des transistors de type P et un facteur de multiplication positif, et un deuxième circuit de pompe de charge comprenant une entrée couplée à la sortie du circuit amplificateur, une sortie couplée à l'entrée de tension de polarisation arrière des transistors de type N et un facteur de multiplication négatif. En outre, lorsque le dispositif comporte l'amplificateur différentiel, la première entrée de l'amplificateur différentiel couplée à l'élément résistif peut correspondre à l'entrée non inverseuse de l'amplificateur différentiel, et la deuxième entrée de l'amplificateur différentiel couplée à la capacité commutée peut correspondre à l'entrée inverseuse de l'amplificateur différentiel.

Lorsque des transistors FDSOI LVT (« Low Voltage Transistor ») de type P et N sont destinés à être polarisés par leur face arrière, le dispositif peut comporter un premier circuit de pompe de charge comprenant une entrée couplée à la sortie du circuit amplificateur, une sortie couplée à l'entrée de tension de polarisation arrière des transistors de type N et un facteur de multiplication positif, et un deuxième circuit de pompe de charge comprenant une entrée couplée à la sortie du circuit amplificateur, une sortie couplée à l'entrée de tension de polarisation arrière des transistors de type P et un facteur de multiplication négatif. En outre, lorsque le dispositif comporte l'amplificateur différentiel, la première entrée de l'amplificateur différentiel couplée à l'élément résistif peut correspondre à l'entrée inverseuse de l'amplificateur différentiel, et la deuxième entrée de l'amplificateur différentiel couplée à la capacité commutée peut correspondre à l'entrée non inverseuse de l'amplificateur différentiel.

Le dispositif peut comporter en outre au moins l'un des éléments suivants :

- un premier élément équivalent à un multiplicateur la valeur de la résistance R ;
- un deuxième élément équivalent à un multiplicateur de la valeur d'impédance de la capacité commutée ;
- un diviseur de fréquence interposé entre la sortie du circuit oscillateur et la capacité commutée ;
- un multiplicateur de fréquence couplé à la sortie du circuit oscillateur.

L'invention concerne également une puce électronique comprenant au moins :

- un dispositif tel que décrit ci-dessus ;
- un circuit numérique synchrone comprenant une entrée d'alimentation électrique et/ou au moins une entrée de polarisation arrière de transistors FDSOI couplée à la sortie du circuit amplificateur ou, lorsque le dispositif comporte un convertisseur de tension couplé à la sortie du circuit amplificateur, à la sortie du convertisseur de tension ou, lorsque le dispositif comporte au moins un circuit de pompe de charge couplé à la sortie du circuit amplificateur, à la sortie dudit au moins un circuit de pompe de charge.

L'entrée d'alimentation électrique du circuit numérique synchrone peut être couplée à l'entrée d'alimentation électrique du circuit oscillateur, ou ladite au moins une entrée de tension de polarisation arrière de transistors FDSOI du circuit numérique synchrone peut être couplée à ladite au moins une entrée de tension de polarisation arrière des transistors FDSOI du circuit oscillateur.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif de génération d'une tension d'alimentation et d'un signal d'horloge destiné à alimenter et cadencer un circuit numérique synchrone, objet de la présente invention, selon un premier mode de réalisation ;
- la figure 2 représente schématiquement une première configuration du dispositif de génération d'une tension d'alimentation et d'un signal d'horloge destiné à alimenter et cadencer un circuit numérique synchrone, objet de la présente invention, selon le premier mode de réalisation ;
- la figure 3 représente schématiquement une partie d'une deuxième configuration du dispositif de génération d'une tension d'alimentation ou de polarisation et d'un signal d'horloge destiné à alimenter ou polariser et cadencer un circuit numérique synchrone, objet de la présente invention, selon le premier mode de réalisation ;

- la figure 4 représente une variante de réalisation d'une capacité commutée d'un dispositif de génération d'une tension d'alimentation ou de polarisation et d'un signal d'horloge, objet de la présente invention ;
- la figure 5 représente une variante de réalisation de capacités commutées et de circuits logiques d'un dispositif de génération d'une tension d'alimentation ou de polarisation et d'un signal d'horloge, objet de la présente invention ;
- les figures 6 à 8 représentent des exemples de réalisation d'un circuit oscillateur d'un dispositif de génération d'une tension d'alimentation ou de polarisation et d'un signal d'horloge, objet de la présente invention ;
- les figures 9 et 10 représentent des exemples de réalisation du dispositif de génération d'une tension d'alimentation et d'un signal d'horloge, objet de la présente invention, selon le premier mode de réalisation ;
- la figure 11 représente schématiquement un dispositif de génération d'une tension d'alimentation et d'un signal d'horloge destiné à alimenter et cadencer un circuit numérique synchrone, objet de la présente invention, selon un deuxième mode de réalisation ;
- la figure 12 représente schématiquement une configuration du dispositif de génération d'une tension d'alimentation et d'un signal d'horloge destiné à alimenter et cadencer un circuit numérique synchrone, objet de la présente invention, selon le deuxième mode de réalisation ;
- la figure 13 représente un exemple de réalisation d'un circuit logique d'un dispositif de génération d'une tension d'alimentation ou de polarisation et d'un signal d'horloge, objet de la présente invention ;
- les figures 14 à 16 représentent des exemples de réalisation du dispositif de génération d'une tension d'alimentation et d'un signal d'horloge, objet de la présente invention, selon le deuxième mode de réalisation ;
- les figures 17 et 18 représentent des mesures du délai de chemin critique et de la tension d'alimentation d'un circuit numérique synchrone alimenté avec une tension de valeur constante ou par un dispositif objet de la présente invention ;
- la figure 19 représente des mesures de la puissance normalisée consommée d'un circuit numérique synchrone alimenté avec une tension de valeur constante ou par un dispositif objet de la présente invention ;
- la figure 20 représente schématiquement un dispositif de génération d'une tension d'alimentation et d'un signal d'horloge destiné à alimenter et cadencer un circuit numérique synchrone, objet de la présente invention, selon une variante du premier mode de réalisation ;
- les figures 21 et 22 représentent schématiquement des exemples de réalisation d'un dispositif de génération de tensions de polarisation et d'un signal d'horloge destiné à polariser et cadencer un circuit numérique synchrone, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

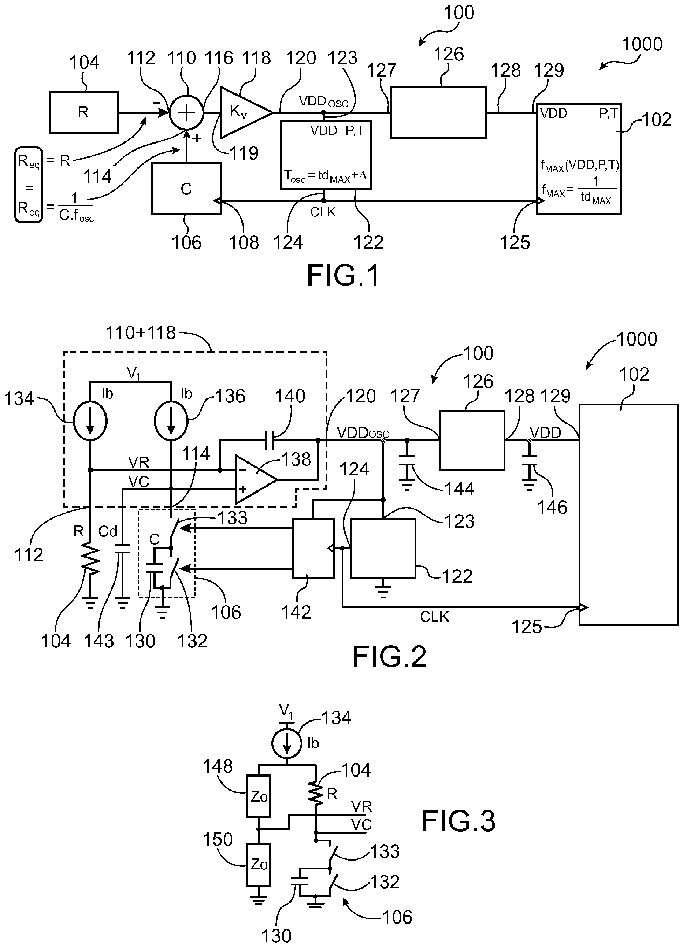

La figure 1 décrite ci-dessous représente schématiquement un dispositif 100 de génération d'une tension d'alimentation et d'un signal d'horloge configuré pour alimenter et cadencer un circuit numérique synchrone 102, selon un premier mode de réalisation.

Le dispositif 100 comporte un élément résistif 104, par exemple une résistance électrique, d'impédance R.

Le dispositif 100 comporte également une capacité commutée 106. La capacité commutée 106 comporte une entrée 108 sur laquelle est appliqué un signal périodique CLK de fréquence fosc, correspondant ici à un signal carré, commandant la commutation de la capacité commutée 106. La fréquence de commutation de la capacité commutée 106 est égale à fosc.

La résistance équivalente $R_{eq}$ de la capacité commutée 106 est telle que :

$$R_{eq} = 1 \,/\, (C.f_{OSC})$$

avec C correspondant à la valeur de la capacité électrique de la capacité commutée 106.

Le dispositif 100 comporte en outre un élément 110 comportant une première entrée 112 couplée à l'élément résistif 104 et une deuxième entrée 114 couplée à la sortie de la capacité commutée 106. L'élément 110 comporte une sortie 116 sur laquelle est délivré un signal, correspondant à une tension ou un courant, représentatif de la différence de valeurs entre R et $R_{eq}$. Ce signal a par exemple une amplitude dont la valeur est représentative de cette différence d'impédance.

Le dispositif 100 comporte également un amplificateur 118 dont une entrée 119 est couplée à la sortie 116 de l'élément 110, et délivrant sur une sortie 120 une tension $V_{DDOSC}$ dont l'amplitude dépend de celle du signal appliqué sur son entrée 119.

L'élément 110 et l'amplificateur 118 forment ensemble un circuit amplificateur ayant pour fonction d'amplifier la différence de valeurs d'impédance entre R et $R_{eq}$, et délivrant sur la sortie 120 une tension dont l'amplitude est représentative d'une différence entre la valeur de la résistance R de l'élément résistif 104 et la valeur de la résistance équivalente $R_{eq}$ de la capacité commutée 106.

Le dispositif 100 comporte en outre un circuit oscillateur 122 comprenant une entrée d'alimentation électrique 123 couplée à la sortie 120 de l'amplificateur 118, et délivrant sur une sortie 124 le signal périodique CLK de fréquence fosc. Le circuit oscillateur 122 comporte des composants, par exemple des composants de logique combinatoire, formant un chemin de propagation de signal dont le délai est représentatif du délai de chemin critique du circuit 102. Ces composants sont choisis et configurés tels que la période Tosc du signal périodique CLK délivré sur la sortie 124 soit telle que, dans les mêmes conditions de fonctionnement (même tension d'alimentation, mêmes variations de procédé, même température de fonctionnement) Tosc = $td_{MAX} + \Delta$, avec $td_{MAX}$ correspondant au délai du chemin critique du circuit 102 et $\Delta$ correspondant au délai de marge servant à garantir que $T_{OSC} > td_{MAX}$ même en présence d'erreurs ou de variations entre le délai du chemin de propagation du circuit oscillateur 122 et $td_{MAX}$. La sortie 124 du circuit oscillateur 122 est couplée à l'entrée 108 de la capacité commutée 106 et à une entrée d'horloge 125, ou entrée de synchronisation, du circuit 102.

Le dispositif 100 comporte avantageusement un convertisseur 126 de tension de type continu - continue, ou convertisseur DC-DC, dont une entrée 127 est couplée à la sortie 120 de l'amplificateur 118, et comporte une sortie 128 sur laquelle est délivrée une tension $V_{DD}$ convertie par le convertisseur 126. Le convertisseur 126 a par exemple un gain sensiblement égal à 1, la tension $V_{DD}$ délivrée sur sa sortie 128 ayant une amplitude similaire à celle de la tension $V_{DDosc}$ reçue sur son entrée 127. La sortie 128 du convertisseur 126 est couplée à une entrée d'alimentation électrique 129 du circuit 102.

Le convertisseur 126 sert d'élément d'isolation et d'adaptation d'impédance entre l'entrée d'alimentation électrique du circuit 102 et la sortie 120 de l'amplificateur 118. Le convertisseur 126 permet d'isoler le circuit oscillateur 122 vis-à-vis des perturbations apportées sur la tension $V_{DD}$ par la consommation dynamique du circuit 102, et conserver ainsi un signal CLK stable. Le convertisseur 126 sert également à fournir un courant d'amplitude suffisante pour obtenir un bon fonctionnement du circuit 102. Le convertisseur correspond par exemple à un régulateur linéaire ou à découpage, comme par exemple un régulateur de type LDO (« Low-dropout » en anglais, ou régulateur à faible chute de tension) ou un régulateur ou convertisseur de type « buck ».

Le dispositif 100 forme donc une boucle de rétroaction dans laquelle le délai du chemin critique $td_{MAX}$ du circuit 102 est estimé à l'aide d'un bloc de logique combinatoire du circuit oscillateur 122 dans lequel le délai de propagation est représentatif du délai $td_{MAX}$ du chemin critique du circuit 102. Le circuit oscillateur 122 forme également un oscillateur générant le signal d'horloge cadençant le circuit 102.

De manière avantageuse, le délai du chemin de propagation formé dans le circuit oscillateur 122 est égal à la somme de la moitié du délai du chemin critique du circuit 102 $td_{MAX}/2$ et de la moitié du délai de marge $\Delta/2$. Une fois rebouclé en oscillateur, le circuit oscillateur 122 présente alors une période d'oscillation Tosc = $td_{MAX} + \Delta$, dont la valeur est donc légèrement supérieure à celle du délai $td_{MAX}$ du chemin critique du circuit 102.

En utilisant dans le circuit oscillateur 122 des éléments logiques réalisés à partir de cellules standards identiques ou similaires à celles utilisées pour réaliser les éléments logiques du circuit 102, le délai de propagation dans le circuit oscillateur 122 évolue de manière similaire à $td_{MAX}$ en fonction des variations de procédé, de la température de fonctionnement, et de la tension d'alimentation (variations PVT). Ainsi, dans les mêmes conditions PVT que le circuit 102, la période d'oscillation du circuit oscillateur 122 est toujours supérieure ou égale au délai du chemin critique du circuit 102.

Dans le dispositif 100, la fréquence fosc (qui est égale à 1/Tosc) du signal périodique CLK délivré sur la sortie 124 du circuit oscillateur 122 est contrôlée par une boucle de contre-réaction, formée par l'élément résistif 104, la capacité commutée 106, l'élément 110, l'amplificateur 118 et le circuit oscillateur 122, commandant la valeur de la tension $V_{DDosc}$, correspondant à la tension d'alimentation du circuit oscillateur 122, de sorte que la période d'oscillation Tosc du signal périodique CLK délivré sur la sortie 124 du circuit oscillateur 122 tende vers la valeur de la constante RC.

Les valeurs de R et de C sont choisies afin que la valeur de l'inverse de la constante RC corresponde à la valeur de la fréquence de fonctionnement souhaitée pour le circuit 102. Toutefois, les valeurs de R et C pourraient être choisies afin que la valeur de l'inverse de la constante RC corresponde à un multiple ou un diviseur de la valeur de la fréquence de fonctionnement souhaitée pour le circuit 102. La fréquence de fonctionnement souhaitée du circuit 102 peut correspondre à un multiple de l'inverse de la constante RC (multiple inférieur ou supérieur ou égal à 1).

Le rapprochement entre les valeurs de $T_{OSC}$ et RC est obtenu en comparant la valeur de la résistance R de l'élément résistif 102 à la valeur de la résistance équivalente Req de la capacité commutée 106 commutant à la fréquence fosc. La boucle de contre-réaction du dispositif 100 évalue la différence entre R et Req et ajuste la valeur de la tension $V_{DDosc}$ afin de rapprocher la valeur de cette différence de 0. Lorsque les valeurs de R et Req sont suffisamment proches l'une de l'autre, on obtient donc la valeur de Tosc qui correspond approximativement à la valeur de la constante RC.

Dans ce premier mode de réalisation, le signal CLK généré par le circuit oscillateur 122 est utilisé directement comme signal d'horloge appliqué sur l'entrée d'horloge 125 du circuit 102, ce qui signifie que la période du signal l'horloge fourni au circuit 102 est approximativement égale à la constante RC.

Le dispositif 100 permet donc de générer, pour un circuit numérique synchrone, à la fois un signal d'horloge correspondant au signal périodique CLK de fréquence $f_{CLK}$ = fosc = 1/(RC) et une tension d'alimentation $V_{DD}$ qui permet d'obtenir un délai de chemin critique égal à RC - Δ. L'asservissement simultané de la période du signal d'horloge CLK et du délai de chemin critique à la même constante RC, calibrée lors de sa réalisation et stable en température, garantit le bon fonctionnement du circuit 102 tout en évitant les surconsommations électriques inutiles.

Le circuit oscillateur 122 correspond par exemple à un oscillateur en anneau, comprenant un nombre impair d'inverseurs, ou à un CPR configuré en oscillateur. Réaliser le circuit oscillateur 122 sous la forme d'un oscillateur en anneau a pour avantage de réduire la consommation et/ou la gigue (« jitter » en anglais) du circuit oscillateur 122 par rapport à un CPR configuré en oscillateur. Par contre, réaliser le circuit oscillateur 122 sous la forme d'un CPR configuré en oscillateur a pour avantage de réaliser un asservissement plus précis de $td_{MAX}$ vis-à-vis de la constante RC, et donc de nécessiter un délai de marge Δ plus faible.

De manière avantageuse, le délai de marge Δ est programmable ou ajustable, rendant le dispositif 100 plus robuste et plus flexible.

L'élément résistif 104 et la capacité commutée 106 peuvent être totalement ou partiellement intégrés avec les autres éléments du dispositif 100. Par nature, la constante RC est insensible aux variations de procédé liées à la réalisation de transistors, et peut être choisie de telle sorte qu'elle ne dérive quasiment pas avec la température de fonctionnement du dispositif 100. Ainsi, après calibration de la constante RC afin de compenser les dispersions de procédé liées à la réalisation de l'élément résistif 104 et de la capacité commutée 106, le circuit 102 alimenté par la tension $V_{DD}$ présente un délai de chemin critique égal à RC - Δ. Le délai de chemin critique du circuit 102 devient donc indépendant des dispersions de procédé et de la température de fonctionnement puisque ces dispersions sont prises en compte dans la détermination de la valeur de la tension d'alimentation $V_{DD}$.

L'ensemble représenté sur la figure 1 incluant le dispositif 100 et le circuit numérique 102 fait partie d'une puce électronique 1000 comportant en outre d'autres éléments électroniques non visibles sur la figure 1.

La figure 2 décrite ci-dessous représente une première configuration du dispositif 100 selon le premier mode de réalisation décrit ci-dessus en lien avec la figure 1.

Dans cette première configuration, l'élément résistif 104 comporte une résistance électrique d'impédance R.

La capacité commutée 106 comporte un condensateur 130 de capacité électrique C. La capacité commutée 106 comporte également deux interrupteurs 132, 133 correspondant par exemple à des transistors, couplés au condensateur 130 tels qu'une fermeture alternée de ces interrupteurs 132, 133 réalise une alternance de phases de charge et de décharge du condensateur 130 à la fréquence à laquelle les interrupteurs 132, 133 sont fermés et ouverts.

Le dispositif 100 selon cette première configuration comporte également une première source de courant 134 alimentée par une tension $V_1$ et délivrant un courant Ib traversant l'élément résistif 104, et une deuxième source de courant 136 délivrant un même courant Ib dans la capacité commutée 106. Les sources de courant 134, 136 comportent par exemple des transistors MOS.

Le dispositif 100 comporte également un amplificateur différentiel 138 monté en intégrateur, avec sa sortie rebouclée sur son entrée inverseuse par une capacité 140. L'entrée inverseuse de l'amplificateur différentiel 138 est couplée à une borne de l'élément résistif 104 telle qu'une tension $V_R$ = R.Ib soit appliquée sur l'entrée inverseuse de l'amplificateur différentiel 138. L'entrée non inverseuse de l'amplificateur différentiel 138 est couplée à une borne de la capacité commutée 106 telle qu'une tension Vc = Ib/(C.fosc) soit appliquée sur l'entrée non inverseuse de l'amplificateur différentiel 138.

Les sources de courant 134, 136, l'amplificateur différentiel 138 et la capacité 140 forment ensemble l'élément 110 et l'amplificateur 118 du schéma précédemment décrit en lien avec la figure 1, c'est-à-dire un circuit amplificateur ayant pour fonction d'amplifier la différence de valeurs d'impédance entre R et $R_{eq}$, et délivrant sur la sortie 120 une tension dont l'amplitude est représentative d'une différence entre la valeur de la résistance R de l'élément résistif 104 et la valeur de la résistance équivalente $R_{eq}$ de la capacité commutée 106. La sortie de l'amplificateur différentiel 138 correspond à la sortie 120 de l'amplificateur 118.

La sortie de l'amplificateur différentiel 138 est couplée à l'entrée d'alimentation électrique 123 du circuit oscillateur 122 et à l'entrée 127 du convertisseur 126.

Le dispositif 100 comporte également un circuit logique 142 recevant en entrée le signal périodique CLK délivré sur la sortie 124 du circuit oscillateur 122 et délivrant en sortie deux signaux périodiques non recouvrants, c'est-à-dire ayant toujours des valeurs opposées l'un par rapport à l'autre, qui commandent la commutation des interrupteurs 132, 133 de la capacité commutée 106. Ainsi, les interrupteurs 132, 133 ne sont à aucun moment tous les deux en position fermée. Les signaux délivrés par le circuit logique 142 sont périodiques, ont une fréquence égale à $f_{OSC}$, et correspondent par exemple à des signaux carrés. Le circuit logique 142 comporte également une entrée d'alimentation électrique couplée à la sortie de l'amplificateur différentiel 138.

Le dispositif 100 comporte également une capacité 143 de valeur Cd couplée en parallèle de la capacité commutée 106 ayant pour fonction de lisser le courant de charge reçu par le condensateur 130 et diminuer les variations de la tension Vc qui amènent du bruit sur cette ligne électrique (variations appelées « ripple » en anglais).

Le dispositif 100 comporte également deux capacités de filtrage 144, 146 respectivement couplées à l'entrée 127 et à la sortie 128 du convertisseur 126.

Dans cette première configuration du dispositif 100, l'asservissement de la résistance équivalente $R_{eq}$ de la capacité commutée 106 à la résistance R de l'élément résistif 104 est implémenté dans le domaine des tensions en appliquant un courant dans l'élément résistif 104 et dans la capacité commutée 106. Une tension $V_R$ est formée aux bornes de l'élément résistif 104 et une tension Vc est formée aux bornes de la capacité commutée 106, par exemple à l'aide de deux courants identiques Ib, puis un amplificateur d'erreur correspondant à l'amplificateur différentiel 138 intègre la différence entre les tensions $V_R$ et $V_C$. Le signal délivré en sortie de l'amplificateur différentiel 138 sert ensuite de tension d'alimentation au circuit oscillateur 122 et au circuit logique 142 associé.

Selon une deuxième configuration du dispositif 100, il est possible de coupler en série l'élément résistif 104 et la capacité commutée 106, comme représenté sur la figure 3 sur laquelle seule une partie du dispositif 100 est visible. Cette configuration permet de garantir que l'élément résistif 104 et la capacité commutée 106 sont traversés par le même courant Ib.

Dans cette deuxième configuration, le dispositif 100 comporte en outre deux impédances 148, 150 couplées en série et de valeur identique $Z_0$, formant une deuxième branche couplée en parallèle à la première branche formée de l'élément résistif 104 et de la capacité commutée 106 et permettant d'appliquer en entrée de l'amplificateur différentiel 138 la tension $V_R$ telle qu'elle soit égale à la moitié de la tension présente aux bornes de l'ensemble formé de l'élément résistif 104 et de la capacité commutée 106. Ces deux impédances 148, 150 correspondent par exemple à des résistances, ou à des capacités commutées, ou à des transistors montés en diode.

Dans cette deuxième configuration, l'amplificateur différentiel 138 intègre la différence entre la tension Vc obtenue à un nœud auquel l'élément résistif 104 et la capacité commutée 106 sont couplés, et la tension $V_R$ obtenue à un autre nœud auquel les deux impédances 148, 150 sont couplées. De manière similaire à la première configuration, le signal délivré en sortie de l'amplificateur différentiel 138 sert de tension d'alimentation au circuit oscillateur 122 et au circuit logique 142. La boucle ainsi formée au sein du dispositif 100 établit l'égalité suivante :

$$(V_R + V_C)/2 = V_C, \text{ c'est-à-dire } V_R = V_C$$

En variante, il est possible que les valeurs des impédances 148, 150 soient ajustables.

En outre, la valeur de l'impédance 148 peut être différente de celle de l'impédance 150. Une telle variante permet de modifier la fréquence fosc du signal CLK généré. Par exemple, en ayant une valeur d'impédance 148 supérieure à celle de l'impédance 150, la fréquence fosc du signal CLK est supérieure à celle qui serait obtenue lorsque les valeurs des impédances 148, 150 sont identiques. Ainsi, si la valeur de l'impédance 148 est égale à $3.Z_0$ et que celle de l'impédance 150 est égale à $Z_0$, la fréquence fosc obtenue dans ce cas sera trois fois supérieure à celle obtenue lorsque les deux impédances 148, 150 ont pour valeur $Z_0$.

Selon une autre variante, il est possible que la valeur de l'élément résistif 104 soit variable. Cette autre variante est compatible avec le fait d'avoir des valeurs d'impédances 148, 150 ajustables et/ou différentes l'une de l'autre, et permet de définir un facteur de multiplication potentiellement quelconque.

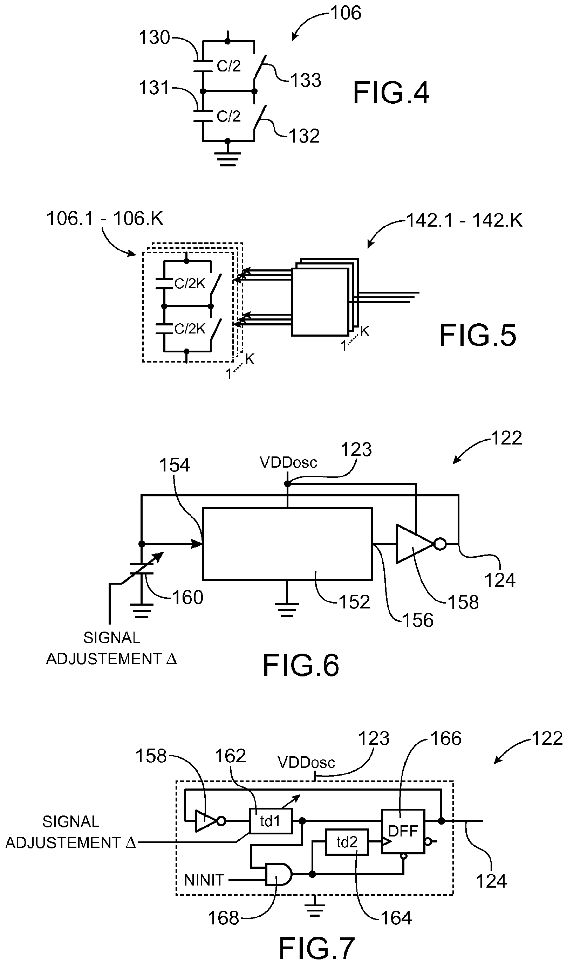

Dans les configurations précédemment décrites, la capacité commutée 106 comporte un condensateur 130 couplé à deux interrupteurs 132, 133 assurant la commutation à la fréquence fosc. Selon une variante applicable à ces deux configurations, la capacité commutée 106 peut comporter deux condensateurs 130, 131 reliés en série l'un à l'autre, chacun de valeur C/2, le nœud de couplage entre ces deux condensateurs 130, 131 étant relié à un nœud de couplage entre les deux interrupteurs 132, 133. Dans une telle capacité commutée 106 représentée sur la figure 4, quelle que soit la configuration des interrupteurs 132, 133, l'un des deux condensateurs 130, 131 est toujours dans une phase de charge. Par rapport à la capacité commutée 106 précédemment décrite en lien avec les figures 2 et 3, cette variante permet d'extraire, pendant une phase de charge de l'un des condensateurs 130, 131, deux fois moins de charges depuis la capacité 143, mais deux fois plus souvent sur la durée totale d'une période $T_{OSC}$. Cette variante permet, par rapport à une capacité commutée 106 comprenant un seul condensateur 130 comme précédemment décrit en lien avec les figures 2 et 3, de diviser par deux les variations de type « ripple ».

Selon une autre variante, lorsque le circuit oscillateur 122 délivre un signal périodique CLK comprenant plusieurs phases, par exemple K phases (avec K nombre entier supérieur ou égal à 2), la valeur de la capacité C peut être divisée par K, et le dispositif 100 peut comporter K capacités commutées 106.1 - 106.K couplées en parallèle les unes des autres afin que chacune de ces capacités commutées 106.1 - 106.K soit pilotée par un signal d'horloge non recouvrant vis-à-vis des autres signaux d'horloge (ce qui signifie qu'à n'importe quel instant, un seul des signaux d'horloge est à l'état haut) commandant la commutation des autres capacités commutées 106.1 - 106.K, ces K signaux d'horloge étant générés par K circuits logiques 142.1 - 142.K chacun à partir d'une des K phases du signal délivré en sortie du circuit oscillateur 122. Cette autre variante peut s'appliquer à des capacités commutées 106 comportant chacune un seul condensateur 130 comme précédemment décrit en lien avec les figures 2 et 3, avec dans ce cas des variations de type « ripple » qui sont réduites d'un facteur K. Cette autre variante peut également s'appliquer à des capacités commutées 106 comportant chacune deux condensateurs 130, 131 comme représenté sur la figure 5. Dans la configuration représentée sur la figure 5, les variations de type « ripple » sont divisées d'un facteur égal à 2K.

Un premier exemple de réalisation du circuit oscillateur 122 est représenté sur la figure 6. Dans ce premier exemple de réalisation, le circuit oscillateur 122 est de type CPR et comporte des composants de logique combinatoire 152 tels que des portes ET, OU, etc., formant, entre une entrée 154 et une sortie 156, un chemin de propagation tel que le délai de propagation d'un signal entre l'entrée 154 et la sortie 156 soit représentatif du délai de chemin critique du circuit 102. De manière avantageuse, le délai du chemin de propagation formé par les composants 152 est égal à la somme de la moitié du délai de chemin critique du circuit 102 $td_{MAX}/2$ et de la moitié du délai de marge $\Delta/2$.

Dans ce premier exemple de réalisation, le circuit oscillateur 122 comporte également un inverseur 158 comprenant son entrée couplée à la sortie 156 du chemin de propagation formé par les composants 152. La sortie de l'inverseur 158 est rebouclée sur l'entrée 154 du chemin formé par les composants 152.

Ainsi rebouclé en oscillateur, le circuit oscillateur 122 présente donc une période d'oscillation $T_{OSC} = td_{MAX} + \Delta$. Le circuit oscillateur 122 comporte également un condensateur variable 160 relié à l'entrée 154 et permettant d'ajuster la valeur du délai de marge $\Delta$.

La figure 7 représente un deuxième exemple de réalisation du circuit oscillateur 122. Dans ce deuxième exemple de réalisation, le circuit oscillateur 122 comporte deux éléments de logique combinatoire 162, 164 formant chacun un chemin de propagation dont le délai est représentatif du délai de chemin critique du circuit 102, et avantageusement égal à la somme de la moitié du délai de chemin critique du circuit 102 $td_{MAX}/2$ et de la moitié du délai de marge $\Delta/2$. Le circuit oscillateur 122 comporte également une bascule 166, ici une bascule D, dont une entrée de donnée D est couplée à la sortie de l'élément 162, dont une entrée d'horloge H est couplée à la sortie de l'élément 164, et dont une entrée de réinitialisation est couplée à la sortie d'une porte ET 168. La sortie Q de la bascule 166, qui forme la sortie 124 du circuit oscillateur 122, est rebouclée sur l'entrée de l'élément 162 par l'intermédiaire de l'inverseur 158. La sortie de la porte ET 168 est également couplée à l'entrée de l'élément 164. Une première entrée de la porte ET 168 est couplée à la sortie de l'élément 162, et un signal d'initialisation NINIT, commandant le début de l'oscillation du circuit oscillateur 122 lorsque sa valeur est à un état haut, est envoyé sur une deuxième entrée de la porte ET 168.

L'ajustement du délai de marge $\Delta$ est réalisé par un signal ajustant le délai de propagation à travers l'élément 162. Dans un tel oscillateur, la somme des délais de propagation à travers les éléments 162 et 164 est supérieure au temps de préparation $t_{setup}$ de la bascule D 166.

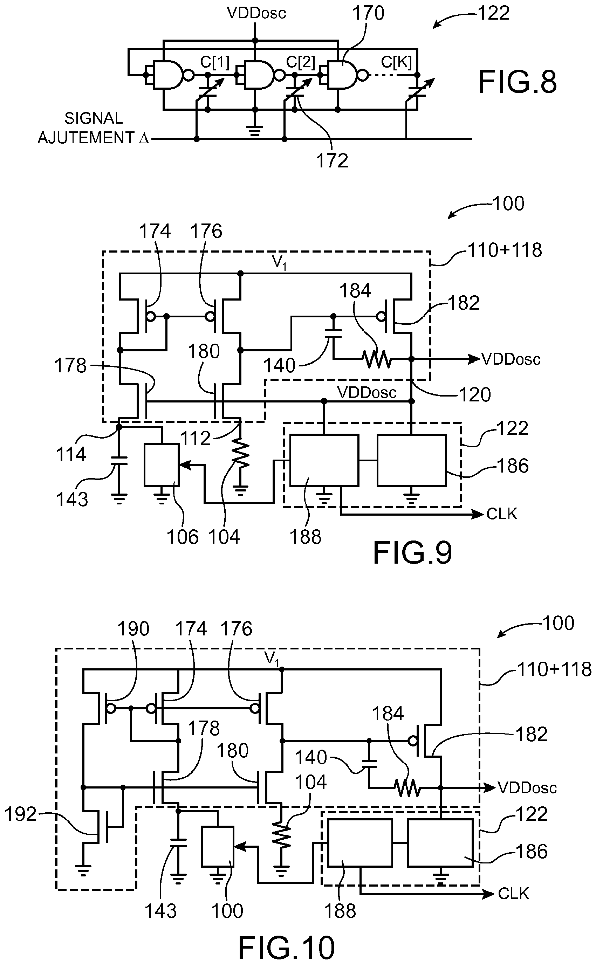

La figure 8 représente un troisième exemple de réalisation du circuit oscillateur 122. Dans ce troisième exemple de réalisation, le circuit oscillateur 122 correspond à un oscillateur en anneau comprenant un nombre impair de portes logiques 170 de type NON ET (comme c'est le cas sur la figure 8) ou NON OU à au moins 2 entrées, ou d'inverseurs, reliées en série les unes aux autres (avec la sortie de la dernière porte logique rebouclée sur l'entrée de la première porte logique). La sortie de chacune de ces portes 170 est de plus couplée à une capacité de charge 172. Les valeurs des capacités de charge 172 sont ajustables par programmation, ce qui permet d'ajuster la sensibilité du délai du circuit oscillateur 122 à celui du chemin critique du circuit, ainsi que le délai de marge $\Delta$. Les capacités de charge 172 peuvent correspondre à des capacités de routage métalliques et/ou de capacités de grille de transistor (NMOS et/ou PMOS).

Lorsque le circuit oscillateur 122 correspond à un oscillateur en anneau, le délai de marge $\Delta$ peut être ajusté via un ajustement des valeurs des capacités de charge et/ou via un ajustement du nombre d'étages de l'oscillateur. Ce délai de marge $\Delta$ peut être fixe ou programmable.

La figure 9 représente un exemple de réalisation du dispositif 100 selon le premier mode de réalisation. Un premier exemple de réalisation du circuit amplificateur formé par l'élément 110 et par l'amplificateur 118 est notamment décrit en lien avec cette figure 9.

Dans cet exemple, les sources de courant 134, 136 et l'amplificateur différentiel 138 sont formés par cinq transistors MOS 174, 176, 178, 180 et 182.

Un premier transistor PMOS 174 comporte sa source couplée à la tension d'alimentation V1. La grille du premier transistor PMOS 174 est couplée à son drain.

Un deuxième transistor PMOS 176 comporte sa source couplée à la tension d'alimentation V1. La grille du deuxième transistor 176 est couplée à la grille du premier transistor PMOS 174.

Un troisième transistor NMOS 178 comporte son drain couplé au drain du premier transistor PMOS 174, sa source couplée à la capacité commutée 106 et au condensateur 143, et sa grille couplée à la sortie 120 du circuit amplificateur 110+118.

Un quatrième transistor NMOS 180 comporte son drain couplé au drain du deuxième transistor PMOS 176, sa source couplée à l'élément résistif 104, et sa grille couplée à la sortie 120 du circuit amplificateur 110+118.

Un cinquième transistor PMOS 182 comporte sa source couplée à la tension d'alimentation V1, sa grille couplée au drain du deuxième transistor PMOS 176, et son drain couplé à la sortie 120 du circuit amplificateur 110+118. Le drain du cinquième transistor PMOS 182 est rebouclé sur sa grille par l'intermédiaire de la capacité 140 et d'une résistance 184.

Ces transistors 174, 176, 178, 180, 182 sont couplés tels qu'ils forment un circuit auto-polarisé utilisant la tension $V_{DDOSC}$ générée, qui assure notamment l'égalité entre les courants traversant l'élément résistif 104 et la capacité commutée 106 et qui réalise l'amplification de la différence entre la tension $V_R$ aux bornes de l'élément résistif 104 et la tension Vc aux bornes de la capacité commutée 106. Le transistor MOS 182 assure notamment une fonction d'amplification et délivre la tension $V_{DDosc}$ sur son drain.

Enfin, le circuit oscillateur 122 est ici réalisé sous la forme de deux élément distincts couplés l'un à l'autre : un oscillateur en anneau 186 et un circuit logique 188 délivrant, à partir du signal de sortie délivré par l'oscillateur en anneau 186, le signal périodique CLK.

Sur la figure 9, le convertisseur 126 n'est pas représenté.

Un autre exemple de réalisation du dispositif 100 est décrit en lien avec la figure 10.

Par rapport au précédent exemple décrit en lien avec la figure 9, le dispositif 100 représenté sur la figure 10 comporte en outre deux transistors MOS 190, 192 formant une source de courant indépendante des autres transistors et fournissant le courant Ib destiné à traverser l'élément résistif 104 et la capacité commutée 106. Le transistor 192 a ici une tension de seuil identique ou supérieure à celle du transistor 190.

Sur la figure 10, la source du transistor PMOS 190 est couplée à la tension d'alimentation V1, sa grille est couplée à celle du premier transistor PMOS 174, et son drain est couplé à la grille du troisième transistor NMOS 178. Le drain du transistor NMOS 192 est couplé au drain du transistor PMOS 190, sa grille est reliée à son drain, et sa source est couplée à un potentiel électrique de référence, par exemple la masse.

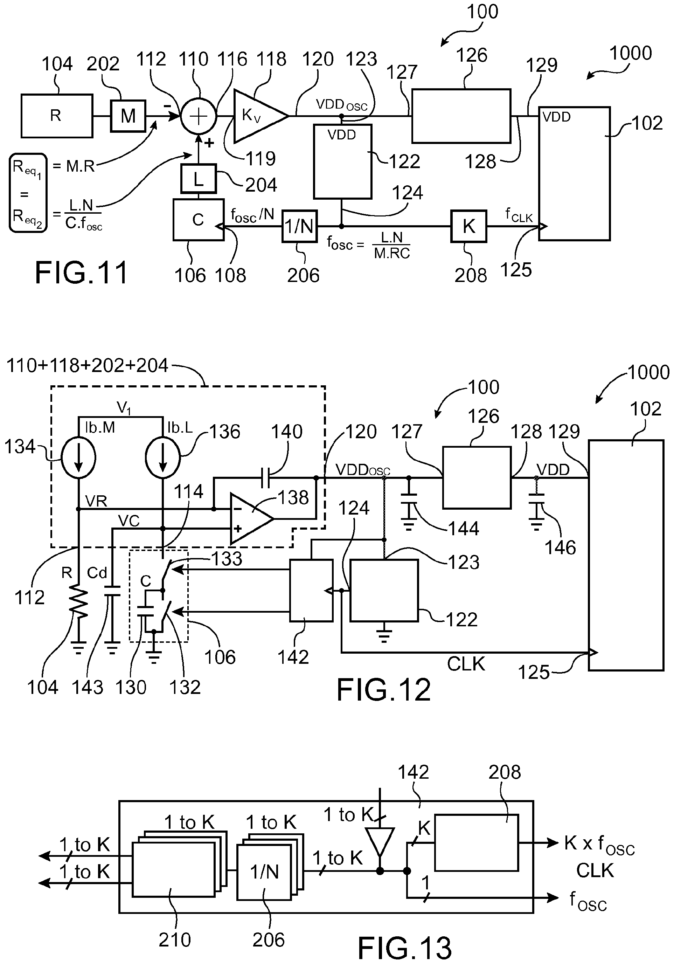

La figure 11 représente schématiquement le dispositif 100 selon un deuxième mode de réalisation.

Le dispositif 100 selon ce deuxième mode de réalisation comporte tous les éléments du dispositif 100 selon le premier mode de réalisation précédemment décrit en lien avec la figure 1.

En outre, le dispositif 100 comporte un premier élément 202 dont la fonction est équivalente à celle d'un multiplicateur d'un facteur M de la valeur d'impédance de l'élément résistif 104, avec M nombre entier positif. En présence de ce premier élément 202, l'élément 110 comporte sa première entrée 112 couplée à une impédance $R_{eq1}$ = M.R.

Le dispositif 100 comporte également un deuxième élément 204 dont la fonction est équivalente à celle d'un multiplicateur d'un facteur L de la valeur d'impédance de la capacité commutée 106, avec L nombre entier positif. De plus, le dispositif 100 comporte également un élément 206 diviseur de fréquence d'un facteur 1/N interposé entre la sortie 124 du circuit oscillateur 122 et l'entrée 108 de la capacité commutée 106, la fréquence de commutation de la capacité commutée 106 étant égale à fosc/N, avec fosc la fréquence du signal périodique délivré en sortie du circuit oscillateur 122 et N nombre entier positif. L'élément 110 comporte donc sa deuxième entrée 114 couplée à une impédance $R_{eq2}$ = $(L.N)/(C.f_{OSC})$.

Le dispositif 100 selon le deuxième mode de réalisation comporte en outre un élément 208 multiplicateur de fréquence d'un facteur K interposé entre la sortie 124 du circuit oscillateur 122 et l'entrée d'horloge 125 du circuit 102, avec K nombre entier positif. Le circuit 102 est donc cadencé par un signal d'horloge de fréquence $f_{CLK}$ = $K.f_{OSC}$.

Dans le dispositif 100 selon le deuxième mode de réalisation, le circuit 102 est cadencé par un signal d'horloge dont la période $T_{CLK}$ est une fraction entière de RC. Ainsi, à partir du dispositif 100 selon ce deuxième mode de réalisation, il est possible de générer plusieurs fréquences d'horloge via un paramétrage des valeurs d'un ou plusieurs des paramètres M, L, N et K, permettant par exemple au dispositif 100 d'avoir différents modes de fonctionnement du circuit numérique 102 (standby ou veille, mode lent, mode rapide, etc.).

Si les paramètres M, L, N et K sont chacun choisis égaux à 1, le dispositif 100 a un fonctionnement analogue à celui du dispositif 100 selon le premier mode de réalisation précédemment décrit.

La fréquence $f_{CLK}$ du signal d'horloge fourni au circuit 102 est ajustée par les paramètres M, N, L, et K, qui sont tous contrôlés numériquement, et qui peut ainsi être différente de la fréquence fosc du signal délivré en sortie du circuit oscillateur 122, ou de la fréquence fosc/N à laquelle est commutée la capacité commutée 106. Pour chaque valeur de fosc, contrôlée par M, N, L, et K, la tension $V_{DD}$ s'adapte pour que le délai du chemin critique $td_{MAX}$ reste inférieur à $T_{OSC}$.

La figure 12 représente une configuration du dispositif 100 conforme au deuxième mode de réalisation décrit ci-dessus.

Dans cet exemple de réalisation, les éléments 104, 106, 122, 126, 138, 140 et 143 sont similaires à ceux précédemment décrits en lien avec la figure 2.

Les fonctions de multiplication d'impédance correspondant aux éléments multiplicateurs 202 et 204 sont mises en oeuvre en réalisant la première source de courant 134 telle qu'elle délivre dans l'élément résistif 104 un courant de valeur égale à M.Ib, et en réalisant la deuxième source de courant 136 telle qu'elle délivre dans la capacité commutée 106 un courant de valeur égale à L.Ib.

Les fonctions de division et de multiplication de fréquences correspondant à l'élément diviseur de fréquence 206 et à l'élément multiplicateur de fréquence 208 sont mises en oeuvre par le circuit logique 142. Dans cet exemple de réalisation, le signal d'horloge CLK est fourni sur l'entrée d'horloge 125 du circuit 102 par le circuit logique 142.

La variante précédemment décrite en lien avec la figure 4, dans laquelle la capacité commutée 106 comporte deux condensateurs 130, 131 couplés en série l'un à l'autre, peut s'appliquer au dispositif 100 selon le deuxième mode de réalisation.

La variante précédemment décrite en lien avec la figure 5, dans laquelle le circuit oscillateur 122 délivre un signal périodique CLK comprenant plusieurs phases, peut s'appliquer au dispositif 100 selon le deuxième mode de réalisation.

Si le circuit oscillateur 122 est constitué de K étages identiques, il est possible de multiplier fosc tel que en $f_{CLK}$ = K.fosc à l'aide d'une fonction OU EXCLUSIF à K entrées connectées sur les K phases du signal délivré par le circuit oscillateur 122. La figure 13 représente un exemple de réalisation du circuit logique 142 comprenant une porte de type OU EXCLUSIF à K entrées formant l'élément 208. Dans ce cas, le délai du chemin formé par chaque étage du circuit oscillateur 122 représente au moins la moitié du délai du chemin critique. Le circuit logique 142 comporte également K éléments diviseurs de fréquence 206 ainsi que K éléments logiques 210 évitant un chevauchement entre les signaux de commande envoyés aux capacités commutées.

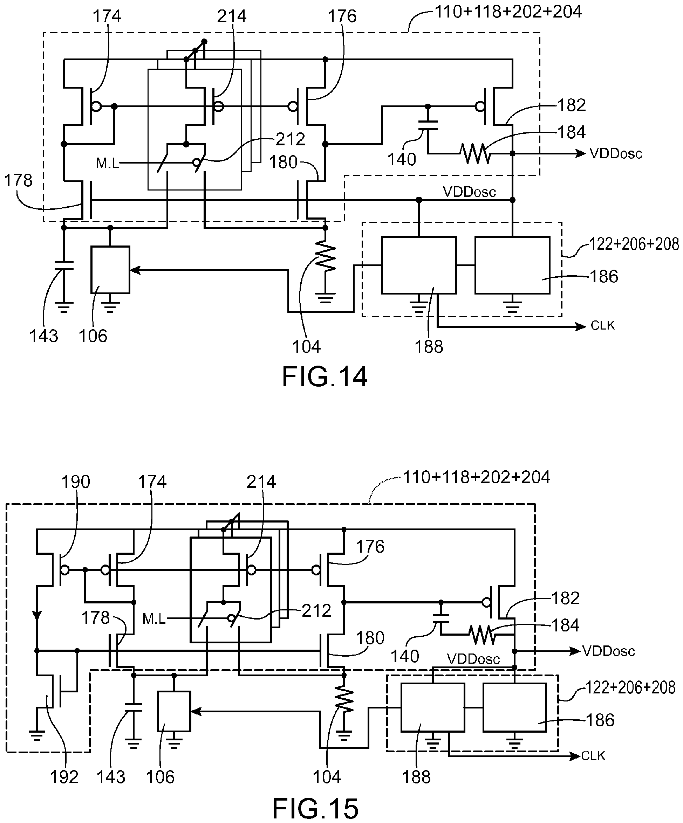

La figure 14 représente un exemple de réalisation du dispositif 100 selon le deuxième mode de réalisation. Un exemple de réalisation de l'élément 110, de l'amplificateur 118, du circuit oscillateur 122 et des éléments 202, 204, 206 et 208 est notamment décrit en lien avec cette figure 14 (le convertisseur 126 n'est pas représenté sur cette figure).

Comme dans l'exemple précédemment décrit en lien avec la figure 9, les sources de courant 134, 136 et l'amplificateur différentiel 138 sont formés par cinq transistors MOS 174, 176, 178, 180 et 182. Ces transistors sont couplés tels qu'ils forment un circuit auto-polarisé utilisant la tension $V_{DDOSC}$, et qui réalise notamment l'amplification de la différence entre la tension $V_R$ aux bornes de l'élément résistif 104 et la tension Vc aux bornes de la capacité commutée 106. Le transistor MOS 182 assure notamment la fonction d'amplification et délivre la tension $V_{DDosc}$ sur son drain.

Par rapport au schéma de la figure 9 précédemment décrit, les valeurs des paramètres M et L sont ajustées par des commutateurs 212 qui permettent de modifier le rapport entre le courant M.lb qui traverse l'élément résistif 104 et le courant L.lb qui traverse la capacité commutée 106 via la connexion de transistors supplémentaires 214 qui réalisent un apport de courant supplémentaire dans l'élément résistif 104 et/ou dans la capacité commutée 106. Les paramètres M et L sont par exemple tels que la somme des valeurs de ces deux paramètres M et L soit constante quel que soit le paramétrage réalisé.

Dans cet exemple de réalisation, les éléments de division et de multiplication de fréquence 206, 208 sont implémentés au sein du circuit logique 188.

La figure 15 représente un autre exemple de réalisation du dispositif 100 selon le deuxième mode de réalisation. Sur cette figure, tous les éléments précédemment décrits en lien avec la figure 10 se retrouvent dans cet exemple de réalisation, avec en plus les commutateurs 212 et les transistors 214 permettant l'ajustement des paramètres M et L. De plus, les éléments de division et de multiplication de fréquence 206, 208 sont implémentés au sein du circuit logique 188.

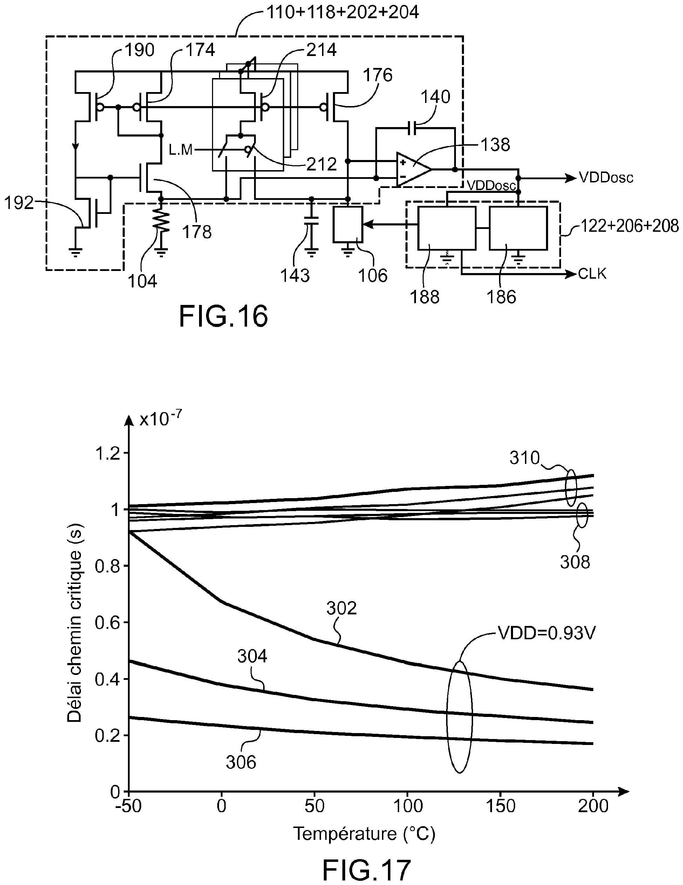

La figure 16 représente un autre exemple de réalisation du dispositif 100 selon le deuxième mode de réalisation. Sur cette figure, tous les éléments précédemment décrits en lien avec la figure 11 se retrouvent dans cet exemple de réalisation, à l'exception du transistor 180. Dans cet exemple de réalisation, la source de courant et l'amplificateur d'erreur sont indépendants l'un de l'autre.

Dans les exemples de réalisation des figures 15 et 16, le transistor 192 peut avoir une tension de seuil supérieure à celle des autres transistors.

Les courbes 302, 304 et 306 visibles sur la figure 17 représentent les valeurs d'un délai de chemin critique d'un circuit numérique synchrone alimenté par une tension de valeur constante égale à 0,93 V en fonction de la température de fonctionnement du circuit, et pour différentes variations de procédé (courbe 302 : procédé lent ou « slow corner » ; courbe 304 : procédé typique ou « typical corner » ; courbe 306 : procédé rapide ou « fast corner »). Les trois courbes désignées par la même référence 308 représentent les valeurs du délai de ce même chemin critique lorsque le circuit numérique est alimenté par une tension d'alimentation générée par le dispositif 100 comprenant un circuit oscillateur 122 de type CPR, en fonction de la température de fonctionnement du circuit et pour les mêmes variations de procédé. Les trois courbes désignées par la même référence 310 représentent les valeurs du délai de ce même chemin critique lorsque le circuit numérique est alimenté par une tension d'alimentation générée par le dispositif 100 comprenant un circuit oscillateur 122 de type oscillateur en anneau, en fonction de la température de fonctionnement du circuit et pour les mêmes variations de procédé.

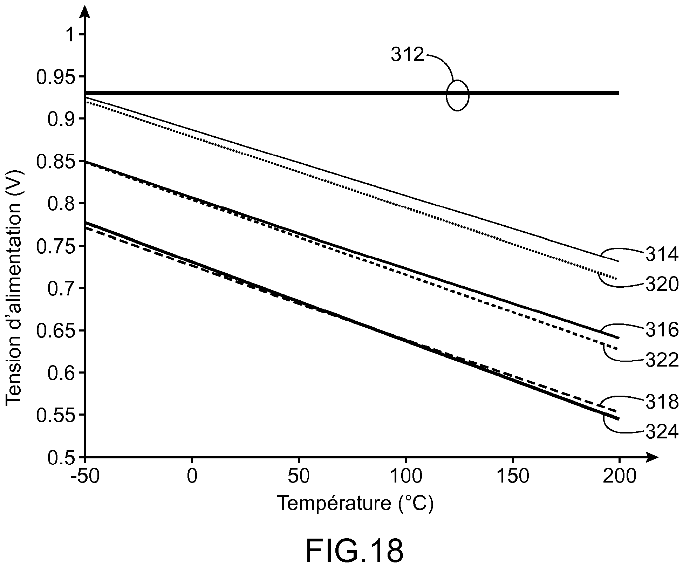

La référence 312 visible sur la figure 18 représente la valeur de la tension d'alimentation électrique de ce même circuit numérique synchrone alimenté par une tension de valeur constante égale à 0,93 V en fonction de la température de fonctionnement du circuit, et pour différentes variations de procédé (slow corner ; typical corner ; fast corner). Les courbes 314, 316 et 318 visibles sur la figure 18 représentent les valeurs de la tension d'alimentation électrique de ce même circuit numérique synchrone alimenté par une tension générée par le dispositif 100 comprenant un circuit oscillateur 122 de type CPR, en fonction de la température de fonctionnement du circuit et pour les mêmes variations de procédé (courbe 314 : slow corner ; courbe 316 : typical corner ; courbe 318 : fast corner). Les courbes 320, 322 et 324 visibles sur la figure 18 représentent les valeurs de la tension d'alimentation électrique de ce même circuit numérique synchrone alimenté par une tension générée par le dispositif 100 comprenant un circuit oscillateur 122 de type oscillateur en anneau, en fonction de la température de fonctionnement du circuit et pour les mêmes variations de procédé (courbe 320 : slow corner ; courbe 322 : typical corner; courbe 324 : fast corner).

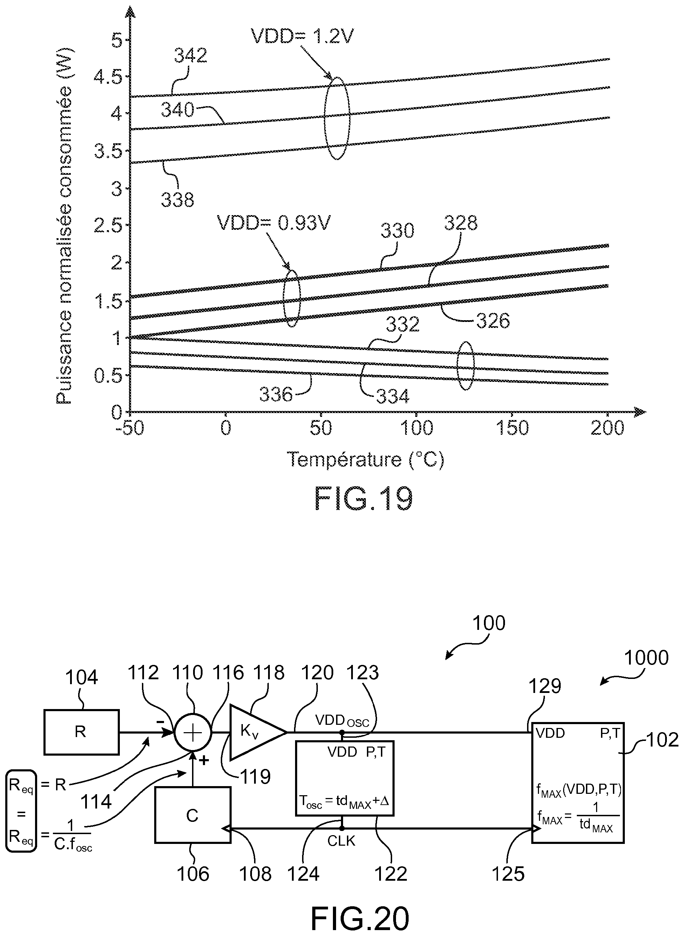

Les courbes 326, 328 et 330 visibles sur la figure 19 représentent les valeurs de la puissance normalisée à, ou divisée par, la puissance requise pour alimenter le circuit 102 dans le pire cas de variations de procédé et de température (cas le plus lent) afin de pouvoir comparer plus facilement les rapports entre les différentes puissances et les variations de procédé et de température, et consommée d'un circuit numérique synchrone alimenté par une tension de valeur constante égale à 0,93 V en fonction de la température de fonctionnement du circuit, et pour différentes variations de procédé (courbe 326 : « slow corner » ; courbe 328 : « typical corner » ; courbe 330 : « fast corner »). Les courbes 332, 334 et 336 représentent les valeurs de la puissance normalisée consommée d'un circuit numérique synchrone alimenté par une tension générée par le dispositif 100 en fonction de la température de fonctionnement du circuit, et pour différentes variations de procédé (courbe 332 : « slow corner » ; courbe 334 : « typical corner » ; courbe 336 : « fast corner »). Les courbes 338, 340 et 342 représentent les valeurs de la puissance normalisée consommée d'un circuit numérique synchrone alimenté par une tension de valeur constante égale à 1,2 V en fonction de la température de fonctionnement du circuit, et pour différentes variations de procédé (courbe 338 : « slow corner » ; courbe 340 : « typical corner » ; courbe 342 : « fast corner »). Ces courbes permettent de voir que pour un procédé classique, à une température de fonctionnement égale à 200°C, la puissance consommée par le circuit est divisée par un peu moins de 4 comparé à une alimentation en tension fixe égale à 0,93V, et divisée d'environ 8 par rapport à une alimentation en tension fixe égale à 1,2V.

Sur les figures 17 et 18, comparé au cas $V_{DD}$ constant égal à 0,93V, l'utilisation du dispositif 100 permet que le délai de chemin critique soit compensé en procédé et température grâce à l'adaptation de la tension d'alimentation en fonction des variations de procédé et de température. La compensation est encore meilleure lorsque le circuit oscillateur est de type CPR. De plus, lorsque le circuit 102 est alimenté avec la tension générée par le dispositif 100, la consommation du circuit 102 diminue avec la température et les variations de procédé, ce qui est l'inverse de l'évolution observée lorsque le circuit est alimenté avec une tension de valeur constante, comme cela est visible sur les figures 19 et 20.

Quel que soit le mode de réalisation ou la variante ou l'exemple de réalisation du dispositif 100, le délai de marge Δ peut être ajusté via un capteur de fautes présent dans le circuit 102 et détectant, en itérant un test de fonctionnement du circuit 102, la plus petite valeur du délai de marge Δ pour laquelle le circuit 102 fonctionne correctement.

En variante des précédents modes de réalisation et exemples de réalisation, il est possible que le circuit oscillateur 122 n'applique pas de délai de marge Δ, et que le convertisseur DC-DC 126 applique une marge de tension ΔV. Dans ce cas, le convertisseur 126 délivre en sortie une tension $V_{DD}$ = $V_{DDOSC}$ + ΔV (et telle que $|V_{DD}| < |V_{DDOSC} + \Delta V|$). Une telle marge de tension permet, comme lorsque le circuit oscillateur 122 applique un délai de marge Δ, d'obtenir un dispositif 100 s'affranchissant des erreurs entre le délai du chemin de propagation du CPR et le délai du chemin critique du circuit, dues par exemple aux dispersions de fabrication ou à des variations de tension dans la grille d'alimentation du circuit. Cette marge de tension ΔV peut être ajoutée à la tension appliquée en entrée du convertisseur 126, ou peut être obtenue en réalisant le convertisseur 126 tel que son gain soit supérieur à 1.

Selon une autre variante, il est possible que le circuit oscillateur 122 applique le délai de marge Δ et que le convertisseur 126 applique la marge de tension ΔV.

Quel que soit le mode de réalisation ou la variante ou l'exemple de réalisation du dispositif 100, ce dernier peut ne pas comporter le convertisseur DC-DC 126. Dans ce cas, la sortie 120 de l'amplificateur 118, sur laquelle la tension $V_{DDosc}$ est délivrée, est couplée directement à l'entrée d'alimentation électrique 129 du circuit 102. En l'absence du convertisseur DC-DC 126, la stabilité de la fréquence du signal CLK se trouve toutefois dégradée par le bruit de commutation du circuit numérique 102 qui perturbe la tension $V_{DDosc}$. La figure 20 représente schématiquement le dispositif 100 selon le premier mode de réalisation et ne comportant pas le convertisseur DC-DC 126.

Quel que soit le mode ou la variante ou l'exemple de réalisation du dispositif 100, celui-ci est compatible avec un ajustement de la tension de seuil des transistors du circuit 102 par polarisation arrière, lorsque les transistors sont de type FDSOI.

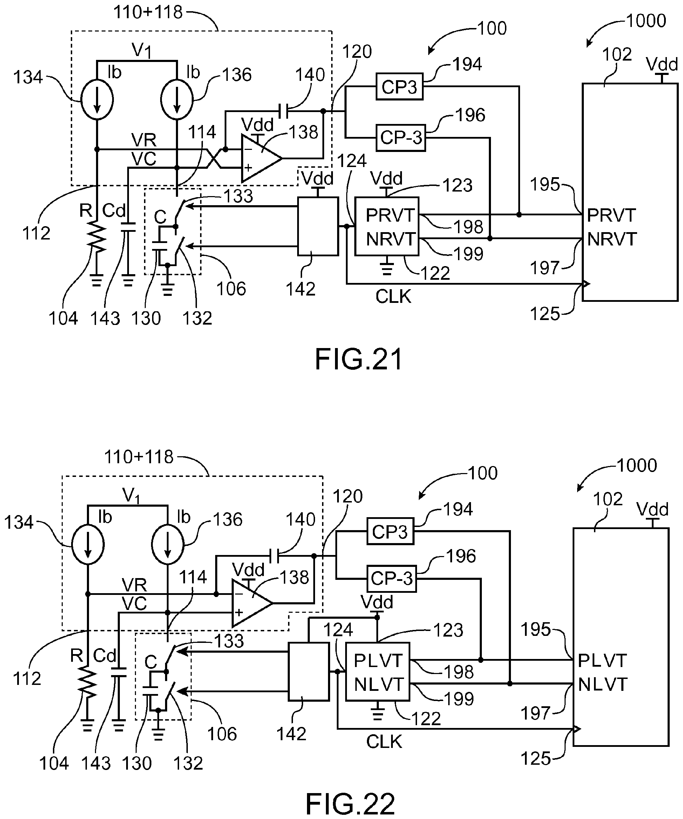

La figure 21 représente un premier exemple de réalisation du dispositif 100 générant des tensions de polarisation arrière de transistors FDSOI et un signal d'horloge. Le dispositif 100 selon ce premier exemple de réalisation est adapté pour fournir des tensions de polarisation arrière à des transistors FDSOI de type RVT.

Le dispositif 100 comporte un circuit amplificateur 110+118 comprenant les mêmes éléments que ceux précédemment décrits en lien avec la figure 2, c'est-à-dire les première et deuxième sources de courant 134, 136, l'amplificateur différentiel 138 et la capacité 140. Du fait que les tensions de polarisation arrière générées par le dispositif 100 sont destinées à être fournies à des transistors RVT qui ont pour propriété d'avoir une vitesse de fonctionnement qui se réduit lorsque leur tension de polarisation arrière (en valeur absolue) augmente (car cela entraîne une hausse de leur tension de seuil, en valeur absolue), le câblage des entrées de l'amplificateur différentiel 138 est inversé par rapport à celui précédemment décrit en lien avec la figure 2. Ainsi, sur la figure 21, la tension $V_R$ est appliquée sur l'entrée non inverseuse de l'amplificateur 138 et la tension Vc est appliquée sur l'entrée inverseuse de l'amplificateur 138.

Le dispositif 100 comporte également l'élément résistif 104, la capacité 143, la capacité commutée 106, le circuit logique 142 et le circuit oscillateur 122. La commande de la capacité commutée 106 est assurée par le circuit logique 142 qui reçoit en entrée le signal périodique CLK délivré sur la sortie 124 du circuit oscillateur 122. L'amplificateur différentiel 138, le circuit numérique synchrone 102, le circuit oscillateur 122 et le circuit logique 142 sont alimentés par une tension d'alimentation Vdd qui, contrairement aux exemples de réalisation précédemment décrits, a une valeur fixe qui n'est pas modulée par la boucle de rétroaction formée par le dispositif 100.

Le dispositif 100 comporte également un premier circuit de pompe de charge 194 assurant une multiplication de la tension délivrée en sortie de l'amplificateur 138. Le facteur de multiplication du premier circuit de pompe de charge 194 est par exemple égal à 3. Le signal délivré en sortie du premier circuit de pompe de charge 194 correspond à la tension de polarisation arrière des transistors FDSOI de type P (qui sont destinés à recevoir une tension de polarisation arrière positive) du circuit 102 et est appliqué sur une première entrée 195 de tension de polarisation arrière des transistors FDSOI de type P du circuit 102 et également sur une première entrée 198 de tension de polarisation arrière des transistors FDSOI de type P du circuit oscillateur 122. Le circuit oscillateur 122 comporte des transistors FDSOI RVT de type P sur lesquels la tension de polarisation arrière appliquée correspond au signal délivré en sortie du premier circuit de pompe de charge 194.

Le dispositif 100 comporte également un deuxième circuit de pompe de charge 196 assurant une multiplication et une inversion de la tension délivrée en sortie de l'amplificateur 138. Le facteur de multiplication du deuxième circuit de pompe de charge 196 est par exemple égal à -3. Le signal délivré en sortie du deuxième circuit de pompe de charge 196 correspond à la tension de polarisation arrière des transistors FDSOI de type N (destinés à recevoir une tension de polarisation arrière négative) du circuit 102 et est appliqué sur une deuxième entrée 197 de tension de polarisation arrière des transistors FDSOI de type N du circuit 102 et également sur une deuxième entrée 199 de tension de polarisation arrière des transistors FDSOI de type N du circuit oscillateur 122. Le circuit oscillateur 122 comporte des transistors FDSOI RVT de type N sur lesquels la tension de polarisation arrière appliquée correspond au signal délivré en sortie du deuxième circuit de pompe de charge 196.

Le dispositif 100 selon cet exemple de réalisation est donc destiné à réaliser une polarisation arrière de transistors FDSOI RVT du circuit 102. Le dispositif 100 est avantageusement utilisé pour des applications très basse consommation, compatible avec des hautes températures et de faibles fuites, et donc avantageusement au domaine de l'IoT.

La figure 22 représente un deuxième exemple réalisation du dispositif 100 générant des tensions de polarisation arrière de transistors FDSOI et d'un signal d'horloge. Le dispositif 100 selon ce deuxième exemple de réalisation est adapté pour fournir des tensions de polarisation arrière à des transistors FDSOI de type LVT.

Le dispositif 100 comporte un circuit amplificateur 110+118 comprenant les mêmes éléments que ceux précédemment décrits en lien avec la figure 2, c'est-à-dire les première et deuxième sources de courant 134, 136, l'amplificateur différentiel 138 et la capacité 140. Du fait que les tensions de polarisation arrière générées par le dispositif 100 sont destinées à être fournies à des transistors LVT qui ont pour propriété d'avoir une vitesse de fonctionnement qui augmente lorsque leur tension de polarisation arrière (en valeur absolue) augmente (car cela entraîne une baisse de leur tension de seuil, en valeur absolue), le câblage des entrées de l'amplificateur différentiel 138 est inversé par rapport à celui précédemment décrit en lien avec la figure 21 et est similaire à celui représenté sur la figure 2 (tension $V_R$ appliquée sur l'entrée inverseuse de l'amplificateur 138 et tension Vc appliquée sur l'entrée non inverseuse de l'amplificateur 138).

Le dispositif 100 comporte également l'élément résistif 104, la capacité 143, la capacité commutée 106, le circuit logique 142 et le circuit oscillateur 122. La commande de la capacité commutée 106 est assurée par le circuit logique 142 qui reçoit en entrée le signal périodique CLK délivré sur la sortie 124 du circuit oscillateur 122. L'amplificateur différentiel 138, le circuit numérique synchrone 102, le circuit oscillateur 122 et le circuit logique 142 sont alimentés par une tension d'alimentation Vdd de valeur fixe, comme sur l'exemple de réalisation représenté sur la figure 21.

Le dispositif 100 comporte en outre le premier circuit de pompe de charge 194. Le signal délivré en sortie du premier circuit de pompe de charge 194 correspond à la tension de polarisation arrière des transistors FDSOI de type N (destinés à recevoir une tension de polarisation arrière positive) du circuit 102. Le dispositif 100 comporte également le deuxième circuit de pompe de charge 196. Le signal délivré en sortie du deuxième circuit de pompe de charge 196 correspond à la tension de polarisation arrière des transistors FDSOI de type P (destinés à recevoir une tension de polarisation arrière négative) du circuit 102 et du circuit oscillateur 122, et est donc appliqué sur la première entrée 195 de tension de polarisation arrière des transistors FDSOI de type P du circuit 102 et également sur la première entrée 198 de tension de polarisation arrière des transistors FDSOI de type P du circuit oscillateur 122. Le signal délivré en sortie du premier circuit de pompe de charge 194 correspond à la tension de polarisation arrière des transistors FDSOI de type N (destinés à recevoir une tension de polarisation arrière positive) du circuit 102 et du circuit oscillateur 122, et est donc appliqué sur la deuxième entrée 197 de tension de polarisation arrière des transistors FDSOI de type N du circuit 102 et également sur la deuxième entrée 199 de tension de polarisation arrière des transistors FDSOI de type N du circuit oscillateur 122.

Le dispositif 100 selon ce deuxième exemple de réalisation est donc destiné à réaliser une polarisation arrière de transistors FDSOI LVT. Le dispositif 100 est avantageusement utilisé pour des applications très basse tension, destinées à des températures de fonctionnement standards et à des basses consommations électriques, et donc par exemple au domaine des dispositifs médicaux implantés.

En outre, il est possible d'avoir le convertisseur 126 qui soit interposé entre la sortie de l'amplificateur 138 et les circuits de pompe de charges 194, 196.

En variante, il est possible que le dispositif ne régule la tension de polarisation que d'un seul type de transistor, N ou P.

Dans les exemples de réalisation précédents, les circuits de pompe de charges 194, 196 permettent d'assurer une multiplication et/ou une inversion de la tension délivrée en sortie de l'amplificateur 138, afin d'obtenir par exemple des tensions de valeur négative ou supérieure à la tension d'alimentation $V_{DD}$.

Lorsque le dispositif 100 génère la ou les tensions de polarisation des faces arrières des transistors FDSOI du circuit numérique synchrone 102, il est possible que le dispositif 100 ne comporte pas les circuits de pompe de charges 194, 196. Par exemple, lorsque le dispositif 100 génère la tension d'alimentation du circuit 102, il possible de faire appel, à la place des circuits de pompe de charge, à un convertisseur de tension de type continu-continu adapté pour fournir en sortie une ou des tensions d'alimentation dont la plage de valeurs correspond à celle souhaitée pour les tensions de polarisation des faces arrières des transistors et soient comprises entre le potentiel électrique de référence, par exemple la masse, et $V_{DD}$.

En outre, même lorsque le dispositif 100 génère des tensions de valeur négative ou supérieure à la tension d'alimentation $V_{DD}$, il est possible de faire appel à des circuits autres que des circuits de pompe de charge tels que des circuits de type convertisseur « boost ».

En outre, que le dispositif 100 génère la ou les tensions de polarisation des faces arrières des transistors FDSOI du circuit 102 ou alimente le circuit 102, la commande de la tension de polarisation ou la tension d'alimentation, entre le circuit amplificateur 110+118 et le circuit 102, peut ne pas modifier le signe de la tension reçue en entrée ni appliquer de facteur multiplicatif, mais uniquement recopier sur sa sortie la tension reçue sur son entrée, ou réaliser uniquement une adaptation entre la valeur de la tension reçue sur son entrée et celle souhaitée pour la ou les tensions d'alimentation ou de polarisation destinée(s) à être obtenues en sortie. Dans ce cas, la présence des circuits de pompe de charge ou de conversion continu - continu n'est pas nécessaire.

De plus, lorsque le dispositif 100 ne régule la tension de polarisation que d'un seul type de transistor, N ou P, il est possible que la sortie du circuit amplificateur 110+118 soit couplée directement à l'entrée 195 ou 197.

En outre, il ressort des différents exemples décrits précédemment que la fréquence du circuit 102 peut être défini à partir des composants R, C et d'un ensemble d'éléments de circuits de sorte que sa fréquence de fonctionnement corresponde à un multiple de l'inverse de la constante RC.

Quel que soit le mode de réalisation ou la variante ou l'exemple de réalisation du dispositif 100, ce dispositif 100 est avantageusement utilisé pour des applications dans lesquelles une très basse consommation électrique est le principal critère à prendre en compte, par exemple dans le domaine de Internet de Objets (ou IoT) dans lequel le circuit intégrant le dispositif 100 présente les propriétés suivantes :

- le circuit possède une antenne, une unité de calcul et de mémoire, une unité de mesure ;
- le circuit fonctionne avec peu de fréquences de fonctionnement différentes (par exemple 2 ou 3) ;
- le circuit est adapté pour fonctionner dans un environnement non stable ;
- la détermination de la fréquence de fonctionnement du circuit ne requiert pas une grande précision (quelques pourcents d'erreur sont admissibles).

De manière alternative, le dispositif 100 peut avantageusement être utilisé dans le domaine de l'électronique médicale implantée, dans lequel le circuit intégrant le dispositif 100 présente les propriétés suivantes :

- le circuit fonctionne à température stable, quasi constante ;
- le circuit comporte une fonction de sommeil dans laquelle il doit présenter une consommation extrêmement faible.

## Revendications

1. Dispositif (100) de génération d'au moins une tension d'alimentation et d'au moins un signal d'horloge, configuré pour alimenter et cadencer un circuit numérique synchrone (102), comprenant au moins :

    - un circuit oscillateur (122) comprenant un chemin de propagation de signal dont le délai est représentatif du délai d'un chemin critique du circuit numérique synchrone (102) et qui varie en fonction de la valeur d'une tension d'alimentation électrique du circuit oscillateur (122), et configuré pour délivrer sur une sortie (124), qui est apte à être couplée à une entrée d'horloge (125) du circuit numérique synchrone (102), un signal périodique dont la fréquence dépend du délai du chemin de propagation de signal ;

- un élément résistif (104) de résistance R ;
- une capacité commutée (106) comprenant une capacité C (130, 131) et qui est couplée à la sortie (124) du circuit oscillateur (122) telle que la fréquence de commutation de la capacité commutée (106) corresponde à la fréquence du signal périodique délivré sur la sortie (124) du circuit oscillateur (122) ou à un multiple ou à un diviseur de la fréquence du signal périodique délivré sur la sortie (124) du circuit oscillateur (122) ;
- un circuit amplificateur (110, 118) configuré pour délivrer, sur une sortie (120) couplée à une entrée d'alimentation électrique (123) du circuit oscillateur (122), une tension dont l'amplitude est représentative d'une différence entre la valeur de la résistance R et la valeur d'une résistance équivalente de la capacité commutée (106).

2. Dispositif (100) de génération d'au moins une tension de polarisation et d'au moins un signal d'horloge, configuré pour polariser des faces arrières de transistors FDSOI du circuit numérique synchrone (102) et cadencer le circuit numérique synchrone (102), comprenant au moins :

   - un circuit oscillateur (122) comprenant un chemin de propagation de signal dont le délai est représentatif du délai d'un chemin critique du circuit numérique synchrone (102) et qui varie en fonction de la valeur d'au moins une tension de polarisation arrière de transistors FDSOI du circuit oscillateur (122), et configuré pour délivrer sur une sortie (124), qui est apte à être couplée à une entrée d'horloge (125) du circuit numérique synchrone (102), un signal périodique dont la fréquence dépend du délai du chemin de propagation de signal ;
   - un élément résistif (104) de résistance R ;
   - une capacité commutée (106) comprenant une capacité C (130, 131) et qui est couplée à la sortie (124) du circuit oscillateur (122) telle que la fréquence de commutation de la capacité commutée (106) corresponde à la fréquence du signal périodique délivré sur la sortie (124) du circuit oscillateur (122) ou à un multiple ou à un diviseur de la fréquence du signal périodique délivré sur la sortie (124) du circuit oscillateur (122) ;
   - un circuit amplificateur (110, 118) configuré pour délivrer, sur une sortie (120) couplée à au moins une entrée de tension de polarisation arrière des transistors FDSOI du circuit oscillateur (122), une tension dont l'amplitude est représentative d'une différence entre la valeur de la résistance R et la valeur d'une résistance équivalente de la capacité commutée (106).

3. Dispositif (100) selon l'une des revendications précédentes, dans lequel le circuit oscillateur (122) est de type CPR ou comporte au moins un oscillateur en anneau.

4. Dispositif (100) selon l'une des revendications précédentes, dans lequel le circuit oscillateur (122) est configuré tel que la fréquence du signal périodique délivré sur la sortie (235) du circuit oscillateur (122) est $f_{OSC} = 1/(td_{MAX} + \Delta)$, avec $td_{MAX}$ correspondant au délai du chemin critique du circuit numérique synchrone (102) et $\Delta$ correspondant à un délai de marge.

5. Dispositif (100) selon l'une des revendications précédentes, dans lequel le chemin de propagation de signal du circuit oscillateur (122) comporte un nombre impair d'éléments inverseurs (158, 170) et forme une boucle telle qu'une sortie (156) du chemin de propagation de signal est reliée à une entrée (154) du chemin de propagation de signal, et dans lequel le délai de propagation entre l'entrée (154) et la sortie (156) du chemin de propagation de signal est égal à $1/(2.f_{OSC})$.

6. Dispositif (100) selon l'une des revendications précédentes, dans lequel le circuit amplificateur (110, 118) comporte :

   - une première source de courant (134) couplée à l'élément résistif (104) et une deuxième source de courant (136) couplée à la capacité commutée (106), les première et deuxième sources de courant (134, 136) étant configurées pour délivrer des courants électriques de même valeur dans l'élément résistif (104) et dans la capacité commutée (106) ;
   - un amplificateur différentiel (138) monté en intégrateur, comportant une première entrée couplée à l'élément résistif (104) telle qu'une tension aux bornes de l'élément résistif (104) soit appliquée sur la première entrée, et une deuxième entrée couplée à la capacité commutée (106) telle qu'une tension aux bornes de la capacité commutée (106) soit appliquée sur la deuxième entrée.

7. Dispositif (100) selon l'une des revendications 1 à 5, dans lequel le circuit amplificateur (110, 118) comporte :

   - une source de courant (134) couplée à l'élément résistif (104) et à la capacité commutée (106) qui sont couplés en série l'un à l'autre ;
   - deux impédances (148, 150) couplées en série l'une à l'autre et en parallèle à l'élément résistif (104) et la capacité commutée (106) ;
- un amplificateur différentiel (138) monté en intégrateur, comportant une première entrée couplée à un premier noeud auquel les deux impédances (148, 150) sont couplées et une deuxième entrée couplée à un deuxième noeud auquel l'élément résistif (104) et la capacité commutée (106) sont couplés.

8. Dispositif (100) selon l'une des revendications précédentes, comportant en outre un circuit logique (142) comprenant une entrée couplée à la sortie (124) du circuit oscillateur (122) et au moins deux sorties chacune couplée à l'un d'au moins deux interrupteurs (132, 133) de la capacité commutée (106), le circuit logique (142) étant configuré pour délivrer sur les deux sorties des signaux périodiques de fréquence égale à $f_{OSC}/N$, avec N nombre entier supérieur ou égal à 1, et commandant chacun alternativement l'ouverture et la fermeture d'un des deux interrupteurs (132, 133) de la capacité commutée (106).

9. Dispositif (100) selon la revendication 8, dans lequel une entrée d'alimentation électrique du circuit logique (142) est couplée à l'entrée d'alimentation électrique (123) du circuit oscillateur (122).

10. Dispositif (100) selon l'une des revendications précédentes, dans lequel la capacité commutée (106) comporte au moins deux condensateurs (130, 131) couplés en série l'un à l'autre et ayant chacun une capacité de valeur C/2, chacun des deux condensateurs (130, 131) étant couplé en parallèle à un interrupteur (132, 133) de la capacité commutée (106).

11. Dispositif (100) selon l'une des revendications précédentes, dans lequel le circuit oscillateur (122) est configuré pour délivrer sur sa sortie (124) un signal périodique comprenant K phases, avec K nombre entier supérieur ou égal à 2, dans lequel le dispositif (100) comporte K capacités commutées (106.1 - 106.K) couplées en parallèle les unes des autres et couplées à la sortie (124) du circuit oscillateur (122) telles que chacune des K capacités commutées (106.1 - 106.K) soit pilotée par l'une des K phases du signal périodique.

12. Dispositif (100) selon l'une des revendications précédentes, comportant en outre un convertisseur (126) de tension de type continu - continu comprenant une entrée (127) couplée à la sortie (120) du circuit amplificateur (110, 118).

13. Dispositif (100) selon la revendication 12, dans lequel le convertisseur (126) de tension est configuré pour délivrer en sortie une tension de valeur égale à la somme de la tension appliquée sur son entrée (127) et d'une marge de tension ΔV.

14. Dispositif (100) selon l'une des revendications 2 à 13, comportant en outre, lorsque le dispositif (100) est configuré pour polariser des faces arrières de transistors FDSOI du circuit numérique synchrone (102), au moins un circuit de pompe de charge (194, 196) comprenant une entrée couplée à la sortie (120) du circuit amplificateur (110, 118) et comprenant au moins une sortie couplé à ladite au moins une entrée de tension de polarisation arrière des transistors FDSOI du circuit oscillateur (122).

15. Dispositif (100) selon l'une des revendications précédentes, comportant en outre au moins l'un des éléments suivants :

- un premier élément (202) équivalent à un multiplicateur la valeur de la résistance R ;
- un deuxième élément (204) équivalent à un multiplicateur de la valeur d'impédance de la capacité commutée (106) ;
- un diviseur de fréquence (206) interposé entre la sortie (124) du circuit oscillateur (122) et la capacité commutée (106) ;
- un multiplicateur de fréquence (208) couplé à la sortie (124) du circuit oscillateur (122).

16. Puce électronique (1000) comprenant au moins :

- un dispositif (100) selon la revendication 1 ou selon la combinaison de la revendication 1 et d'au moins l'une des revendications 3 - 13 et 15 ;
- un circuit numérique synchrone (102) comprenant une entrée d'alimentation électrique (129) couplée à la sortie (120) du circuit amplificateur (110, 118) ou, lorsque le dispositif (100) comporte un convertisseur (126) de tension couplé à la sortie (120) du circuit amplificateur (110, 118), à la sortie (128) du convertisseur (126) de tension ou, lorsque le dispositif (100) comporte au moins un circuit de pompe de charge (194, 196) couplé à la sortie (120) du circuit amplificateur (110, 118), à la sortie dudit au moins un circuit de pompe de charge (194, 196).

17. Puce électronique (1000) selon la revendication 16, dans laquelle l'entrée d'alimentation électrique (129) du circuit numérique synchrone (102) est couplée à l'entrée d'alimentation électrique (123) du circuit oscillateur (122).

18. Puce électronique (1000) comprenant au moins :

- un dispositif (100) selon la revendication 2 ou selon la combinaison de la revendication 2 et d'au moins l'une des revendications 3 - 15 ;
- un circuit numérique synchrone (102) comprenant au moins une entrée de tension de polarisation arrière de transistors FDSOI couplée à la sortie (120) du circuit amplificateur (110, 118) ou, lorsque le dispositif (100) comporte un convertisseur (126) de tension couplé à la sortie (120) du circuit amplificateur (110, 118), à la sortie (128) du convertisseur (126) de tension ou, lorsque le dispositif (100) comporte au moins un circuit de pompe de charge (194, 196) couplé à la sortie (120) du circuit amplificateur (110, 118), à la sortie dudit au moins un circuit de pompe de charge (194, 196).

19. Puce électronique (1000) selon la revendication 18, dans laquelle ladite au moins une entrée de tension de polarisation arrière de transistors FDSOI du circuit numérique synchrone (102) est couplée à ladite au moins une entrée de tension de polarisation arrière des transistors FDSOI du circuit oscillateur (122).

**Patentansprüche**

1. Vorrichtung (100) zum Erzeugen mindestens einer Versorgungsspannung und mindestens eines Taktsignals, die dazu konfiguriert ist, eine synchrone digitale Schaltung (102) zu versorgen und zu takten, mindestens Folgendes umfassend:

   - eine Oszillatorschaltung (122), die einen Signalausbreitungspfad umfasst, dessen Verzögerung repräsentativ für die Verzögerung eines kritischen Pfads der synchronen digitalen Schaltung (102) ist und der sich in Abhängigkeit von dem Wert einer Stromversorgungsspannung der Oszillatorschaltung (122) ändert, und die dazu konfiguriert ist, an einem Ausgang (124), der dazu ausgelegt ist, mit einem Takteingang (125) der synchronen digitalen Schaltung (102) gekoppelt zu werden, ein periodisches Signal zu liefern, dessen Frequenz von der Verzögerung des Signalausbreitungspfads abhängt;
   - ein Widerstandselement (104) mit dem Widerstand R;
   - einen geschalteten Kondensator (106), der eine Kapazität C (130, 131) umfasst und der derart mit dem Ausgang (124) der Oszillatorschaltung (122) gekoppelt ist, dass die Schaltfrequenz des geschalteten Kondensators (106) der Frequenz des am Ausgang (124) der Oszillatorschaltung (122) gelieferten periodischen Signals oder einem Vielfachen oder einem Teiler der Frequenz des am Ausgang (124) der Oszillatorschaltung (122) gelieferten periodischen Signals entspricht; und
   - eine Verstärkerschaltung (110, 118), die dazu konfiguriert ist, an einem Ausgang (120), der mit einem Stromversorgungseingang (123) der Oszillatorschaltung (122) gekoppelt ist, eine Spannung zu liefern, deren Amplitude repräsentativ für eine Differenz zwischen dem Wert des Widerstands R und dem Wert eines äquivalenten Widerstands des geschalteten Kondensators (106) ist.

2. Vorrichtung (100) zum Erzeugen mindestens einer Vorspannung und mindestens eines Taktsignals, die dazu konfiguriert ist, die Rückseiten von FD-SOI-Transistoren der synchronen digitalen Schaltung (102) vorzuspannen und die synchrone digitale Schaltung (102) zu takten, Folgendes umfassend:

   - eine Oszillatorschaltung (122), die einen Signalausbreitungspfad umfasst, dessen Verzögerung repräsentativ für die Verzögerung eines kritischen Pfads der synchronen digitalen Schaltung (102) ist und der sich in Abhängigkeit von dem Wert mindestens einer rückseitigen Vorspannung an den FD-SOI-Transistoren der Oszillatorschaltung (122) ändert, und die dazu konfiguriert ist, an einem Ausgang (124), der dazu ausgelegt ist, mit einem Takteingang (125) der synchronen digitalen Schaltung (102) gekoppelt zu werden, ein periodisches Signal zu liefern, dessen Frequenz von der Verzögerung des Signalausbreitungspfads abhängt;
   - ein Widerstandselement (104) mit dem Widerstand R;
   - einen geschalteten Kondensator (106), der eine Kapazität C (130, 131) umfasst und der derart mit dem Ausgang (124) der Oszillatorschaltung (122) gekoppelt ist, dass die Schaltfrequenz des geschalteten Kondensators (106) der Frequenz des am Ausgang (124) der Oszillatorschaltung (122) gelieferten periodischen Signals oder einem Vielfachen oder einem Teiler der Frequenz des am Ausgang (124) der Oszillatorschaltung (122) gelieferten periodischen Signals entspricht;
   - eine Verstärkerschaltung (110, 118), die dazu konfiguriert ist, an einem Ausgang (120), der mit mindestens einem Eingang für die rückseitige Vorspannung der FD-SOI-Transistoren der Oszillatorschaltung (122) gekoppelt ist, eine Spannung ausgibt, deren Amplitude repräsentativ für eine Differenz zwischen dem Wert des Widerstands R und dem Wert eines äquivalenten Widerstands des geschalteten Kondensators (106) ist.

3. Vorrichtung (100) nach einem der vorhergehenden Ansprüche, wobei die Oszillatorschaltung (122) vom CPR-Typ ist oder mindestens einen Ringoszillator aufweist.

**4.** Vorrichtung (100) nach einem der vorhergehenden Ansprüche, wobei die Oszillatorschaltung (122) derart konfiguriert ist, dass die Frequenz des am Ausgang (235) der Oszillatorschaltung (122) gelieferten periodischen Signals fosc = 1/(td$_{MAX}$ + Δ) ist, wobei td$_{MAX}$ der Verzögerung des kritischen Pfads der synchronen digitalen Schaltung (102) entspricht und Δ einer Bereichsverzögerung entspricht.

**5.** Vorrichtung (100) nach einem der vorhergehenden Ansprüche, wobei der Signalausbreitungspfad der Oszillatorschaltung (122) eine ungerade Anzahl invertierender Elemente (158, 170) aufweist und eine Schleife bildet, so dass ein Ausgang (156) des Signalausbreitungspfads mit einem Eingang (154) des Signalausbreitungspfads verbunden ist, und wobei die Ausbreitungsverzögerung zwischen dem Eingang (154) und dem Ausgang (156) des Signalausbreitungspfads 1/(2·f$_{OSC}$).

**6.** Vorrichtung (100) nach einem der vorhergehenden Ansprüche, wobei die Verstärkerschaltung (110, 118) Folgendes aufweist:

- eine erste Stromquelle (134), die mit dem Widerstandselement (104) gekoppelt ist, und eine zweite Stromquelle (136), die mit dem geschalteten Kondensator (106) gekoppelt ist, wobei die erste und die zweite Stromquelle (134, 136) dazu konfiguriert sind, elektrische Ströme mit demselben Wert in das Widerstandselement (104) und den geschalteten Kondensator (106) zu liefern;
- einen als Integrator geschalteten Differenzverstärker (138), der einen ersten Eingang, der so an das Widerstandselement (104) gekoppelt ist, dass eine Spannung an den Anschlüssen des Widerstandselements (104) an den ersten Eingang angelegt wird, und einen zweiten Eingang aufweist, der so an den geschalteten Kondensator (106) gekoppelt ist, dass eine Spannung an den Anschlüssen des geschalteten Kondensators (106) an den zweiten Eingang angelegt wird.

**7.** Vorrichtung (100) nach einem der Ansprüche 1 bis 5, wobei die Verstärkerschaltung (110, 118) Folgendes aufweist:

- eine Stromquelle (134), die mit dem Widerstandselement (104) und dem geschalteten Kondensator (106) gekoppelt ist, die in Reihe zueinander gekoppelt sind;
- zwei Impedanzen (148, 150), die in Reihe zueinander und parallel zum Widerstandselement (104) und zum geschalteten Kondensator (106) gekoppelt sind;
- einen als Integrator geschalteten Differenzverstärker (138), der einen ersten Eingang, der an einen ersten Knoten gekoppelt ist, an den die beiden Impedanzen (148, 150) gekoppelt sind, und einen zweiten Eingang aufweist, der an einen zweiten Knoten gekoppelt ist, an den das Widerstandselement (104) und der geschaltete Kondensator (106) gekoppelt sind.

**8.** Vorrichtung (100) nach einem der vorhergehenden Ansprüche, die ferner eine Logikschaltung (142) aufweist, die einen mit dem Ausgang (124) der Oszillatorschaltung (122) gekoppelten Eingang und mindestens zwei Ausgänge umfasst, die jeweils mit einem von mindestens zwei Schaltern (132, 133) des geschalteten Kondensators (106) gekoppelt sind, wobei die Logikschaltung (142) dazu konfiguriert ist, an den beiden Ausgängen periodische Signale mit einer Frequenz gleich fosc/N zu liefern, wobei N eine ganze Zahl größer gleich 1 ist, und jeweils abwechselnd das Öffnen und Schließen eines der beiden Schalter (132, 133) des geschalteten Kondensators (106) steuert.

**9.** Vorrichtung (100) nach Anspruch 8, wobei ein Stromversorgungseingang der Logikschaltung (142) mit dem Stromversorgungseingang (123) der Oszillatorschaltung (122) gekoppelt ist.

**10.** Vorrichtung (100) nach einem der vorhergehenden Ansprüche, wobei der geschaltete Kondensator (106) mindestens zwei Kondensatoren (130, 131) umfasst, die in Reihe zueinander gekoppelt sind und jeweils eine Kapazität mit dem Wert C/2 aufweisen, wobei jeder der beiden Kondensatoren (130, 131) parallel zu einem Schalter (132, 133) des geschalteten Kondensators (106) gekoppelt ist.

**11.** Vorrichtung (100) nach einem der vorhergehenden Ansprüche, wobei die Oszillatorschaltung (122) dazu konfiguriert ist, an ihrem Ausgang (124) ein periodisches Signal mit K Phasen zu liefern, wobei K eine ganze Zahl größer gleich 2 ist, wobei die Vorrichtung (100) K geschaltete Kondensatoren (106.1 - 106.K) aufweist, die parallel zueinander gekoppelt und derart mit dem Ausgang (124) der Oszillatorschaltung (122) gekoppelt sind, dass jeder der K geschalteten Kondensatoren (106.1 - 106.K) von einer der K Phasen des periodischen Signals gesteuert wird.

**12.** Vorrichtung (100) nach einem der vorhergehenden Ansprüche, die ferner einen Spannungswandler (126) vom Gleichstrom-Gleichstrom-Typ aufweist, der einen Eingang (127) umfasst, der mit dem Ausgang (120) der Verstärkerschaltung (110, 118) gekoppelt ist.

**13.** Vorrichtung (100) nach Anspruch 12, wobei der Spannungswandler (126) dazu konfiguriert ist, am Ausgang eine Spannung mit einem Wert zu liefern, der der Summe der an seinem Eingang (127) angelegten Spannung und einem Spannungsbereich ΔV entspricht.

14. Vorrichtung (100) nach einem der Ansprüche 2 bis 14, die ferner mindestens eine Ladungspumpenschaltung (194, 196) aufweist, die einen Eingang umfasst, der mit dem Ausgang (120) der Verstärkerschaltung (110, 118) gekoppelt ist, und mindestens einen Ausgang umfasst, der mit dem mindestens einen Eingang für die rückseitige Vorspannung der FD-SOI-Transistoren der Oszillatorschaltung (122) gekoppelt ist, wenn die Vorrichtung (100) dazu konfiguriert ist, die Rückseiten von FD-SOI-Transistoren der synchronen digitalen Schaltung (102) vorzuspannen.

15. Vorrichtung (100) nach einem der vorhergehenden Ansprüche, die ferner mindestens eines der folgenden Elemente aufweist:

    - ein erstes Element (202), das einem Multiplikator des Werts des Widerstands R entspricht;
    - ein zweites Element (204), das einem Multiplikator des Impedanzwerts des geschalteten Kondensators (106) entspricht;
    - einen Frequenzteiler (206), der zwischen den Ausgang (124) der Oszillatorschaltung (122) und den geschalteten Kondensator (106) geschaltet ist;
    - einen Frequenzmultiplikator (208), der mit dem Ausgang (124) der Oszillatorschaltung (122) gekoppelt ist.

16. Elektronischer Chip (1000), der mindestens Folgendes umfasst:

    - eine Vorrichtung (100) nach Anspruch 1 oder nach der Kombination aus Anspruch 1 und mindestens einem der Ansprüche 3-15 und 15;
    - eine synchrone digitale Schaltung (102), die einen Stromversorgungseingang (129) umfasst, der mit dem Ausgang (120) der Verstärkerschaltung (110, 118) oder, wenn die Vorrichtung (100) einen mit dem Ausgang (120) der Verstärkerschaltung (110, 118) gekoppelten Spannungswandler (126) aufweist, mit dem Ausgang (128) des Spannungswandlers (126) oder, wenn die Vorrichtung (100) mindestens eine mit dem Ausgang (120) der Verstärkerschaltung (110, 118) gekoppelte Ladungspumpenschaltung (194, 196) aufweist, mit dem Ausgang der mindestens einen Ladungspumpenschaltung (194, 196) gekoppelt ist.

17. Elektronischer Chip (1000) nach Anspruch 16, wobei der Stromversorgungseingang (129) der synchronen digitalen Schaltung (102) mit dem Stromversorgungseingang (123) der Oszillatorschaltung (122) gekoppelt ist.

18. Elektronischer Chip (1000), der mindestens Folgendes umfasst:

    - eine Vorrichtung (100) nach Anspruch 2 oder nach der Kombination aus Anspruch 2 und mindestens einem der Ansprüche 3-15;
    - eine synchrone digitale Schaltung (102), die mindestens einen Eingang für die rückseitige Vorspannung von FD-SOI-Transistoren umfasst, der mit dem Ausgang (120) der Verstärkerschaltung (110, 118) oder, wenn die Vorrichtung (100) einen mit dem Ausgang (120) der Verstärkerschaltung (110, 118) gekoppelten Spannungswandler (126) aufweist, mit dem Ausgang (128) des Spannungswandlers (126) oder, wenn die Vorrichtung (100) mindestens eine mit dem Ausgang (120) der Verstärkerschaltung (110, 118) gekoppelte Ladungspumpenschaltung (194, 196) aufweist, mit dem Ausgang der mindestens einen Ladungspumpenschaltung (194, 196) gekoppelt ist.

19. Elektronischer Chip (1000) nach Anspruch 18, wobei der mindestens einen Eingang für die rückseitige Vorspannung der FD-SOI-Transistoren der synchronen digitalen Schaltung (102) mit dem mindestens einen Eingang für die rückseitige Vorspannung der FD-SOI-Transistoren der Oszillatorschaltung (122) gekoppelt ist.

**Claims**

1. Device (100) for generating at least one supply voltage and at least one clock signal, configured to supply and clock a synchronous digital circuit (102), comprising at least:

    - an oscillator circuit (122) comprising a signal propagation path, the delay whereof is representative of the delay of a critical path of the synchronous digital circuit (102) and which varies as a function of the value of a power supply voltage to the oscillator circuit (122), and configured to output, from an output (124) which is capable of being coupled to a clock input (125) of the synchronous digital circuit (102), a periodic signal, the frequency whereof depends on the delay of the signal propagation path;
    - a resistive element (104) of resistance R;
    - a switched capacitor (106) comprising a capacitance C (130, 131) and which is coupled to the output (124) of the oscillator circuit (122) such that the switching frequency of the switched capacitor (106) corresponds to the frequency of the periodic signal output from the output (124) of the oscillator circuit (122) or to a multiple or to a divisor of the frequency of the periodic signal output from the output (124) of the oscillator circuit (122);

- an amplifier circuit (110, 118) configured to output, from an output (120) coupled to a power supply input (123) of the oscillator circuit (122), a voltage, the amplitude whereof is representative of a difference between the value of the resistance R and the value of an equivalent resistance of the switched capacitor (106).

2. Device (100) for generating at least one bias voltage and at least one clock signal, configured to bias the back faces of FDSOI transistors of the synchronous digital circuit (102) and to clock the synchronous digital circuit (102), comprising at least:

- an oscillator circuit (122) comprising a signal propagation path, the delay whereof is representative of the delay of a critical path of the synchronous digital circuit (102) and which varies as a function of the value of at least one back-bias voltage to the FDSOI transistors of the oscillator circuit (122), and configured to output, from an output (124), which is capable of being coupled to a clock input (125) of the synchronous digital circuit (102), a periodic signal, the frequency whereof depends on the delay of the signal propagation path;
- a resistive element (104) of resistance R;
- a switched capacitor (106) comprising a capacitance C (130, 131) and which is coupled to the output (124) of the oscillator circuit (122) such that the switching frequency of the switched capacitor (106) corresponds to the frequency of the periodic signal output from the output (124) of the oscillator circuit (122) or to a multiple or to a divisor of the frequency of the periodic signal output from the output (124) of the oscillator circuit (122);
- an amplifier circuit (110, 118) configured to output, from an output (120) coupled to at least one back-bias voltage input of the FDSOI transistors of the oscillator circuit (122), a voltage, the amplitude whereof is representative of a difference between the value of the resistance R and the value of an equivalent resistance of the switched capacitor (106).

3. Device (100) according to one of the preceding claims, wherein the oscillator circuit (122) is of the CPR type or includes at least one ring oscillator.

4. Device (100) according to one of the preceding claims, wherein the oscillator circuit (122) is configured such that the frequency of the periodic signal output from the output (235) of the oscillator circuit (122) is $f_{osc} = 1/(td_{MAX} + \Delta)$, where $td_{MAX}$ corresponds to the critical path delay of the synchronous digital circuit (102) and $\Delta$ corresponds to a margin delay.

5. Device (100) according to one of the preceding claims, wherein the signal propagation path of the oscillator circuit (122) has an odd number of inverting elements (158, 170) and forms a loop such that an output (156) of the signal propagation path is connected to an input (154) of the signal propagation path, and wherein the propagation delay between the input (154) and the output (156) of the signal propagation path is equal to $1/(2.f_{osc})$.

6. Device (100) according to one of the preceding claims, wherein the amplifier circuit (110, 118) includes:

- a first current source (134) coupled to the resistive element (104) and a second current source (136) coupled to the switched capacitor (106), the first and second current sources (134, 136) being configured to output electrical currents of the same value into the resistive element (104) and the switched capacitor (106);
- a differential amplifier (138) connected as an integrator, including a first input coupled to the resistive element (104) such that a voltage across the terminals of the resistive element (104) is applied to the first input, and a second input coupled to the switched capacitor (106) such that a voltage across the terminals of the switched capacitor (106) is applied to the second input.

7. Device (100) according to one of claims 1 to 5, wherein the amplifier circuit (110, 118) includes:

- a current source (134) coupled to the resistive element (104) and to the switched capacitor (106), which are coupled in series to one another;
- two impedances (148, 150) coupled in series to one another and in parallel to the resistive element (104) and the switched capacitor (106);
- a differential amplifier (138) connected as an integrator, including a first input coupled to a first node to which the two impedances (148, 150) are coupled, and a second input coupled to a second node to which the resistive element (104) and the switched capacitor (106) are coupled.

8. Device (100) according to one of the preceding claims, further including a logic circuit (142) comprising an input coupled to the output (124) of the oscillator circuit (122) and at least two outputs each coupled to one of at least two switches (132, 133) of the switched capacitor (106), the logic circuit (142) being configured to output, from the two outputs, periodic signals of frequency equal to fosc/N, where N is an integer greater than or equal to 1, and each alternately controlling the opening and closing of one of the two switches (132, 133) of the switched capacitor (106).

9. Device (100) according to claim 8, wherein a power supply input of the logic circuit (142) is coupled to the power supply input (123) of the oscillator circuit (122).

10. Device (100) according to one of the preceding claims, wherein the switched capacitor (106) includes at least two capacitors (130, 131) coupled in series to one another and each having a capacitance of value C/2, each of the two capacitors (130, 131) being coupled in parallel to a switch (132, 133) of the switched capacitor (106).

11. Device (100) according to one of the preceding claims, wherein the oscillator circuit (122) is configured to output, from its output (124), a periodic signal comprising K phases, where K is an integer greater than or equal to 2, wherein the device (100) includes K switched capacitors (106.1 -106.K) coupled in parallel to one another and coupled to the output (124) of the oscillator circuit (122) such that each of the K switched capacitors (106.1 - 106.K) is controlled by one of the K phases of the periodic signal.

12. Device (100) according to one of the preceding claims, including a voltage converter (126) of the DC-to-DC type comprising an input (127) coupled to the output (120) of the amplifier circuit (110, 118).

13. Device (100) according to claim 12, wherein the voltage converter (126) is configured to output a voltage equal to the sum of the voltage applied to its input (127) and a voltage margin $\Delta V$.

14. Device (100) according to one of claims 2 to 13, further including, when the device (100) is configured to bias the rear faces of FDSOI transistors of the synchronous digital circuit (102), at least one charge pump circuit (194, 196) comprising an input coupled to the output (120) of the amplifier circuit (110, 118) and comprising at least one output coupled to said at least one back-bias voltage input of the FDSOI transistors of the oscillator circuit (122).

15. Device (100) according to one of the preceding claims, further including at least one of the following elements:

- a first element (202) equivalent to a multiplier of the value of the resistance R;
- a second element (204) equivalent to a multiplier of the value of the impedance of the switched capacitor (106);
- a frequency divider (206) interposed between the output (124) of the oscillator circuit (122) and the switched capacitor (106);
- a frequency multiplier (208) coupled to the output (124) of the oscillator circuit (122).

16. Electronic chip (1000) comprising at least:

- a device (100) according to claim 1 or to one of claims 3 to 13 combined with claim 1 or to claim 15 combined with claim 1;
- a synchronous digital circuit (102) comprising a power supply input (129) coupled to the output (120) of the amplifier circuit (110, 118) or, when the device (100) includes a voltage converter (126) coupled to the output (120) of the amplifier circuit (110, 118), to the output (128) of the voltage converter (126) or, when the device (100) includes at least one charge pump circuit (194, 196) coupled to the output (120) of the amplifier circuit (110, 118), to the output of said at least one charge pump circuit (194, 196).

17. Electronic chip (1000) according to claim 16, wherein the power supply input (129) of the synchronous digital circuit (102) is coupled to the power supply input (123) of the oscillator circuit (122).

18. Electronic chip (1000) comprising at least:

- a device (100) according to claim 2 or to one of claims 3 to 15 combined with claim 2;
- a synchronous digital circuit (102) comprising at least one back-bias input of FDSOI transistors coupled to the output (120) of the amplifier circuit (110, 118) or, when the device (100) includes a voltage converter (126) coupled to the output (120) of the amplifier circuit (110, 118), to the output (128) of the voltage converter (126) or, when the device (100) includes at least one charge pump circuit (194, 196) coupled to the output (120) of the amplifier circuit (110, 118), to the output of said at least one charge pump circuit (194, 196).

19. Electronic chip (1000) according to claim 18, wherein said at least one back-bias voltage input of FDSOI transistors of the synchronous digital circuit (102) is coupled to said at least one back-bias voltage input of the FDSOI transistors of the oscillator circuit (122).

FIG.1

FIG.2

FIG.3

FIG.4

FIG.5

SIGNAL
ADJUSTEMENT Δ

FIG.6

SIGNAL
ADJUSTEMENT Δ

NINIT

FIG.7

VDDosc

C[1] C[2] 170 C[K] 122

SIGNAL
AJUTEMENT Δ

172

**FIG.8**

100

174 176

110+118

V₁

184 182

178 180 140 VDDosc

VDDosc 120

114 112 122

143 186

106 104 188 CLK

**FIG.9**

190 174 176 100

110+118

V₁

184 182

178 180 140 VDDosc

192 104

143 100 122

186

188 CLK

**FIG.10**

FIG.11

$R_{eq_1} = M.R$
$=$
$R_{eq_2} = \dfrac{L.N}{C.f_{osc}}$

$f_{osc} = \dfrac{L.N}{M.RC}$

FIG.12

FIG.13

FIG.14

FIG.15

EP 4 038 476 B1

FIG.16

FIG.17

29

FIG.18

FIG.19

FIG.20

FIG.21

FIG.22

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8046601 B1
- US 5585754 A
- US 2002190283 A1